# EUROPÄISCHE PATENTSCHRIFT

(11) **EP 0 773 517 B1**
(45) Veröffentlichungstag und Bekanntmachung des Hinweises auf die Patenterteilung: **31.08.2005**
(21) Anmeldenummer: 96250237.3
(22) Anmeldetag: 18.10.1996
(51) Int. Cl.: G07B 17/00, G07B 17/02

(54) **Verfahren und Anordnung zur automatischen Modem-Typenerkennung und Adaption**
Method and device for automatic modem-type recognition and adaptation
Procédé et dispositif pour la reconnaissance automatique du type de modem et l'adaption

(30) Priorität: 13.11.1995 DE 19543075
(43) Veröffentlichungstag der Anmeldung: 14.05.1997
(73) Patentinhaber: Francotyp-Postalia AG & Co. KG, 16547 Birkenwerder (DE)
(72) Erfinder: Berthold, Arndt, 10369 Berlin (DE); Wagner, Andreas, 10969 Berlin (DE)

(56) Entgegenhaltungen:
- EP-A- 0 660 269
- US-A- 5 202 899
- US-A- 5 202 963
- US-A- 5 437 010

## Beschreibung

Die Erfindung betrifft ein Verfahren und Anordnung zur automatischen Modem-Typerkennung und Adaption gemäß der in den Ansprüchen 1 und 11 angegebenen Art. Die erfindungsgemäße Lösung verbessert die Initialisierung und Handhabung von Frankiermaschinen, bei oder nach deren Installation im Feld, wenn diese mit einem anderen Modem-Typ bzw. mit einem externen Modem nachgerüstet und an ein Kommunikationsnetz angepaßt werden sollen.

Die gesicherte Nachladung einer Frankiermaschine mit einem monetären Guthaben wurde in US 3 255 439 einerseits bereits mit einer automatischen Signalübertragung über Konverter einschließende Datenübermittelungsvorrichtung von der Frankiermaschine zur Datenzentrale verbunden, wenn immer eine vorbestimmte Geldmittelsumme, welche frankiert wurde, oder Stückzahl an bearbeiteten Poststücken oder eine vorbestimmte Zeitperiode erreicht wurde. Alternativ kann ein der Geldmittelsumme, Stückzahl oder Zeitperiode entsprechendes Signal übermittelt werden. Dabei erfolgt die Kommunikation mittels binärer Signale über miteinander über eine Telefonleitung verbundene Konverter. Die Maschine erhält eine ebenso gesicherte Nachladung entsprechend der Kreditbalance und blockiert in dem Fall, wenn kein Kredit nachgeliefert wird. Nachteilig ist die Beschränkung auf spezielle Konverter zur Signalübertragung.

Aus der EP 285 390 A2 ist eine konfigurierbare Schnittstelle einer Frankiermaschine bekannt. Von der Schnittstelle wird selektiv ein MODEM angesteuert, um Daten zwischen der Frankiermaschine und einem Gerät zu übertragen. Dabei sollen zwischen Geräten nicht nur gesicherte sondern auch ungesicherte Daten übertragen werden. Da verschiedene spezielle Schnittstellen an einer Frankiermaschine lästig wären und ein neuer Kommunikationsstandart nicht ohne unvermeidliche Verzögerungen einsetzbar wäre, wurde ein "general purpose communication port" geschaffen.

Eine aus der EP 660 269 A2 bekannte Frankiermaschine ist mit mindestens einem Eingabemittel, einem Ausgabemittel, einem Ein/Ausgabe-Steuermodul, einer Programm-, Daten- und insbesondere die Abrechnungsregister tragenden Speichereinrichtung, einer Steuereinrichtung, einem Druckermodul und einem MODEM ausgerüstet. Das MODEM ist eine spezielle Datenübermittlungsvorrichtung für Telefonnetze. Nachteilig ist, daß nur ein vorbestimmter an einer bestimmten Schnittstelle gekoppelter MODEM-Typ eingesetzt wird. Andererseits werden auch Frankiermaschinenvarianten vertrieben, mit manueller Nachladung beim Postamt, welche aber vorbereitet sind, zukünftig über einen vorbestimmten MODEM-Typ mit einer Datenzentrale verbunden zu werden. Für den Kunden ist es nicht akzeptabel, wenn sich später herausstellt, daß der erforderliche Typ nicht mehr erhältlich bzw. zulässig ist. Eine nachträgliche Umprogrammierung müßte mit einem Reset-EPROM vorgenommen werden und ist kompliziert und aufwendig.

Gegenwärtig ist ein ständiges Anwachsen der Anforderungen an ein MODEM zu verzeichnen, welches in Frankiermaschinen eingesetzt wird. Bei jeder Kommunikation mit der entfernten Datenzentrale wird bekanntlich, vor einer Guthabennachladung in die Frankiermaschine die Identitätsnummer der Frankiermaschine und die Werte in den Postregistern zur Autorisierung zur Datenzentrale übertragen. Es wurde ebenfalls vorgeschlagen, daß dann wenn eine vorbestimmte Stückzahl an Frankierdrucken erreicht ist, automatisch eine Kommunikation mit der entfernten Datenzentrale aufgenommen wird, um einen Stückzahlkredit nachzuladen. Zukünftig werden MODEMs mit höheren Übertragungsraten zur Verfügung stehen, welche größere Datenmengen kostengünstig zu übermitteln erlauben. In Frankiermaschinen eingesetzte MODEMs werden entsprechend den verschiedenen Anforderungen an die Übertragungsrate variieren. Dem entsprechend müßte eine Programmanpassung des in der Frankiermaschine gespeicherten Programms vorgenommen werden, je nach MODEM-Typ oder danach ob eine Low-Cost-Variante oder eine komfortable bzw. Sicherheitsvariante der Frankiermaschine zum Einsatz kommt. Andererseits ist auch im Reparaturfall kein anderer MODEM-TYP einsetzbar, insbesondere wenn das Programm nicht nachträglich verändert werden kann. Die länderspezifischen Telefonanlagen weisen ebenfalls technische Besonderheiten auf, welche vor dem Zustandekommen einer Datenübermittlung zu beachten sind.

Für elektronische Geräte, Terminals oder Frankiermaschinen, welche mit entfernten Datenverarbeitungseinrichtungen oder anderen elektronischen Geräten kommunikativ verbunden werden sollen, besteht vielfach der Wunsch, daß auch verschiedene Typen an speziellen Datenübermittelungsvorrichtungen für Telefonnetze eingebaut oder extern angeschlossen werden können. Für diesen Zweck offenbart US 5202899 ein Verfahren zur automatischen Modemerkennung. Auf diesem Gebiet ist eine schnelle Entwicklung für MODEMs zu verzeichnen, so daß einige MODEM-Typen schnell veraltet und nicht mehr erhältlich bzw. nicht mehr einsetzbar sind. Nachteilig sind hierbei, beispielsweise für die unterschiedliche MODEM-Typen, eine stark schwankende Übertragungsrate und die verschiedenen Steuersequenzen zum Verbindungsaufbau vor bzw. zum Verbindungsabbau nach einer Kommunikation. Zwar ist das nach erfolgreichen Verbindungsaufbau ablaufende Verbindungsprotokoll weitgehend genormt und entspricht den geltenden Postvorschriften und/oder international gültigen Empfehlungen. Aber für jedes Land existieren unterschiedliche Vorschriften für den Anschluß von Telekommunikationsendgeräten an das jeweilige Postnetz. Im Unterschied zur entfernten Datenverarbeitungseinrichtung bzw. Datenzentrale, wo ein MODEM-Typ eingesetzt werden kann, welcher die unterschiedlichen Verbindungsprotokoll-Typen erkennen und verarbeiten kann, sind die erforderlichen Änderungen und Modifikationen bei den produzierten Endgeräten häufiger notwendig. Bei der Herstellung elektronischer Terminals kommt eine Vielzahl an unterschiedlichen MODEM-Typen zum Einsatz. Solche Terminals sollen nach deren Herstellung in unterschiedlichen Ländern eingesetzt werden. Also müßte jedesmal eine länderspezifische Modem-Typ-Anpassung und Initialisierung realisiert werden, wenn beim späteren länderspezifischen Einsatz eine Kommunikation zur jeweiligen entfernten Datenverarbeitungseinrichtung zustande kommen soll. Die Nachrüstung eines vorhandenen Terminals mit einem externen Modem, welches mit der vorhandenen Schnittstelle gekoppelt werden soll, kann deshalb bisher nicht von Kunden selbst vorgenommen werden. Eine solche Nachrüstung mit einem externen Modem ist insbesondere für Frankiermaschine vorteilhaft, welche monetäre Daten gespeichert enthalten, die einem Verbrauch unterliegen und deshalb in Zeitabständen aufgestockt werden müssen.

Der Erfindung liegt die Aufgabe zugrunde, ein Verfahren und eine Frankiermaschine der eingangs genannten Art anzugeben, mit dem auf eine schnelle Weise eine Adaption an ein MODEM für unterschiedliche MODEM-Typen hergestellt werden kann, insbesondere zwecks Datenverbindung über ein Kommunikationsnetz zu einer externen Datenzentrale. Eine Subaufgabe besteht im Vorsehen von Maßnahmen zur bequemen Eingabe, d.h. daß durch Einbeziehung der vorgenannten Adaption keine Verschlechterung für den Nutzer der Frankiermaschine beim User-interface hinsichtlich der Nachladung eines Guthabens eintritt.

Die Aufgabe wird erfindungsgemäß mit den Merkmalen der Ansprüche 1 und 11 gelöst.

Der Mikroprozessor der Frankiermaschine ist erfindungsgemäß programmiert, nach dem Eintritt in einen Kommunikationsmodus in einem Schritt den Modem-Typ festzustellen, anhand der in einem Speicherbereich für einen MODEM-Detect-Speicher (MDS) im nichtflüchtigen Speicher gespeicherten Information, auf welche das Programm zugreift. Wenn im MODEM-Detect-Speicher (MDS) keine entsprechende Information über den Modem-Typ eingespeichert ist, wird eine Erkennungsprozedur für den Modem-Typ ausgeführt. Der Mikroprozessor der Frankiermaschine ist programmiert, entsprechend dem gespeicherten Modem-Typ eine Schnittstelle im Ein/Ausgabe-Steuermodul und das angeschlossene Modem zu initialisieren, bevor im Rahmen des Kommunikationsmodus eine Datenzentrale angewählt wird.

Eine Anordnung zur automatischen Modem-Typerkennung und Adaption innerhalb eines Kommunikationsmodus, weist einen Mikroprozessor in einer Steuereinheit des elektronischen Gerätes bzw. Terminals oder Frankiermaschine auf, welcher über einen Ein/Ausgabe-Steuermodul mit einem Modem und mit einem Mittel verbunden ist, um mindestens den Eintritt in den Kommunikationsmodus auszulösen. Über eine Schnittstelle wird selektiv das MODEM angesteuert, um Daten zu übertragen. Ein nichtflüchtiger Speicher und ein Nurlesespeicher ROM sind über einen Mikroprozessorbus mit dem Mikroprozessor verbunden, um für diesen ein Programm sowie Programmcode zur Verfügung zu stellen, womit der Mikroprozessor so programmiert ist, daß das Modem initialisiert werden kann. Es ist vorgesehen, daß das vorgenannte, den Eintritt in den Kommunikationsmodus auslösende Mittel, ein Eingabemittel einschließt, welches eine erste vorbestimmte Taste aufweist, deren Betätigung den Eintritt in den Kommunikationsmodus auslöst, daß im Nurlesespeicher ROM auch modemspezifischen Sendesequenzen für eine vorbestimmte Anzahl an Typen für Modems gespeichert vorliegen, daß der nichtflüchtige Speicher (NVM) einen Speicherbereich für einen MODEM-Detect-Speicher (MDS) aufweist, auf welchen das Programm zugreift, wobei das elektronische Gerät bzw. Terminal programmiert ist, entsprechend einem im MODEM-Detect-Speicher (MDS) gespeicherten Modem-Typ eine Schnittstelle im Ein/Ausgabe-Steuermodul und das angeschlossene Modem zu initialisieren, bevor eine Datenzentrale angewählt wird.

Bei der Lösung wurde von der Kenntnis ausgegangen, daß sich MODEM-Typen unterscheiden durch:
1. - firmenspezifische technische Hardware (beispielsweise umschaltbare Betrieb einer Waage oder eines MODEMs über dieselbe Schnittstelle oder eines firmenspezifischen Einbaumodems),
2. - länderspezifische technische Anforderungen für den elektrischen Anschluß der Schnittstelle an das Kommunikationsnetz (beispielsweise bezüglich der maximal fließenden Ströme, Spannung und Widerstände von Telefonleitungen, und Erlaubnis spezieller Hardware-Merkmale, wie u.a. der Erdungstaste, sowie Schaltungsteile für deren Funktion), welche in den länderspezifische Postvorschriften zur Postzulassung definiert sind,
3. - Initialisierungsstring, Baudrate und länderspezifisches Protokoll zum Verbindungsaufbau (z.B. USA-Europa)
4. - Zugriffsmöglichkeiten auf das Kommunikationsnetz (beispielsweise aus Nebenstellen oder mit Erd-Taste) durch entsprechende Initialisierung des MODEMs und Wahlparametereinstellung.

Erfindungsgemäß stellt ein Nurlesespeicher ROM dem Mikroprozessor des Terminals über den Mikroprozessorbus mindestens einen externen Programmcode zur Verfügung, welcher die modemspezifische Sendesequenz umfaßt. Bei der Programmierung mit dem Programm wird der Programmcode für ein zukünftiges Nachrüsten berücksichtigt. Dabei wird die Option durch eine entsprechende Vielzahl an Programmcode aufrechterhalten, daß (beispielsweise im Falle einer Reparatur) ein unterschiedlicher MODEM-Typ einsetzbar wird.

Die vorgenannte Anordnung eignet sich für alle Frankiermaschinen, welche über ein MODEM mit einer Datenzentrale kommunizieren sollen und ein MODEM sowie einen nichtflüchtigen Speicher, Nurlesespeicher ROM, einen Ein/Ausgabe-Steuermodul aufweisen, die mit einem Mikroprozessor verbunden sind. Die Erfindung hat den Vorteil, daß bei Einbau eines anderen MODEM TYPs keine Veränderung im Programm der Frankiermaschine nachträglich vorgenommen werden muß, obwohl unterschiedliche MODEM-Typen eingesetzt werden.

Die erfindungsgemäße Lösung geht bei einer Erkennungsprozedur davon aus, daß die in der Frankiermaschine gespeicherten modemspezifischen Sendesequenzen nacheinander an das eingebaute MODEM ausgesendet werden und das MODEM seine modemspezifische Antwort (Sendesequenz) an den Mikroprozessor der Frankiermaschine zurück sendet, wobei der Mikroprozessor einen Vergleich vornimmt. Der erkannte MODEM-Typ wird im Modem-Detekt-Speicher (MDS) nichtflüchtig gespeichert. Es ist weiterhin vorgesehen, die Erkennungsprozedur zu überspringen, wenn eine entsprechende Information über den MODEM-Typ im Modem-Detekt-Speicher (MDS) gespeichert worden ist. Das ist regelmäßig der Fall, wenn die Erkennungsprozedur für ein zur Kommunikation benutztes MODEM bereits einmal ausgeführt wurde und das Ergebnis nichtflüchtig gespeichert worden ist. Anderenfalls liegt eine No-Modem-Information vor, welche den Mikroprozessor veranlaßt, die vorgenannte Erkennungsprozedur vorzunehmen.

Am Ein/Ausgabe-Steuermodul ist ein - mindestens eine erste, zweite und dritte vorbestimmte Taste aufweisendes - Eingabemittel angeschlossen, wobei die Betätigung der ersten vorbestimmten Taste den Eintritt in den Kommunikationsmodus einschließlich vorgenannter Erkennungsprozedur auslöst und eine Betätigung der zweiten vorbestimmten Taste einen gewünschten Eingabeparameter bestätigt und automatisch eine Initialisierung der Schnittstelle im Ein/Ausgabe-Steuermodul und des angeschlossenen Modems startet.

Der Mikroprozessor der Frankiermaschine ist programmiert, entsprechend einem gespeicherten MODEM-Typ eine Schnittstelle im Ein/Ausgabe-Steuermodul und das angeschlossene Modem zu initialisieren, bevor eine Datenzentrale angewählt wird. Zusätzlich wurde, nach Betätigung der dritten vorbestimmten Taste, eine Möglichkeit zur Editierung für eine variable Initialisierungsstring und Parametereinstellung für einen MODEM-Typ geschaffen.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1,: Blockschaltbild einer Frankiermaschine mit erfindungsgemäßer MODEM-Typ-Erkennung und Adaption,
- Figur 2,: Gesamtablaufplan für die Steuerung der Frankiermaschine,
- Figur 3,: Detail des Gesamtablaufplans für die Steuerung der Frankiermaschine beim Erreichen des Kommunikationsmodus mit MODEM-Typ-Erkennung,
- Figur 4: Ablaufplan für die MODEM-Typ-Erkennung,
- Figur 5: Ablaufplan für die Initialisierung der Schnittstelle und des Modems und Anwählen der Datenzentrale.

Die erfindungsgemäße Frankiermaschine zeichnet sich durch einen Mikroprozessor 6, ein interne und/oder externe Schnittstellen aufweisendes Ein/Ausgabe-Steuermodul 4 sowie durch ein Programm in einem Nurlesespeicher ROM 11 und einem MODEM-Detekt-Speicher (MDS-Zellen) in einem nichtflüchtigen Speicher 5a, 5b oder 8 aus, wobei der nichtflüchtige Speicher, der Nurlesespeicher ROM und der Ein/Ausgabe-Steuermodul mit dem Mikroprozessor verbunden sind. Am Ein/Ausgabe-Steuermodul 4 ist mindestens eine Übertragungseinrichtung angekoppelt, welche mit einer Datenzentrale DZ kommunizieren soll.

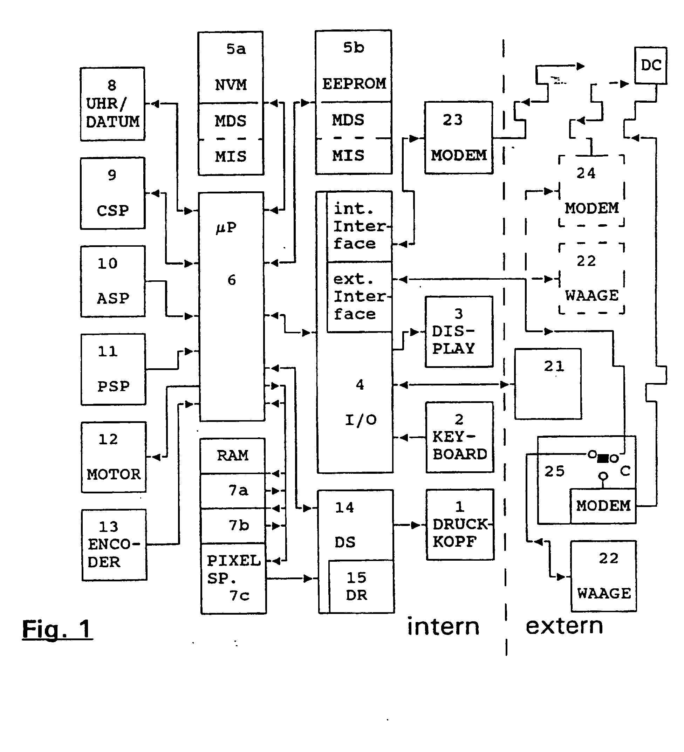

Als Übertragungseinrichtung wird vorzugsweise ein MODEM-Typ aus einer vorbestimmten Vielzahl von Modem-Typen eingesetzt. Die anhand der Figur 1 nachfolgend näher für Frankiermaschinen erläuterte Anordnung zur automatischen Modem-Typerkennung innerhalb eines Kommunikationsmodus, mit einem Mikroprozessor in einer Steuereinheit des elektronischen Gerätes bzw. Terminals, welcher über einen Ein/Ausgabe-Steuermodul 4 mit einem Modem verbunden ist, eignet sich grundsätzlich für alle Frankiermaschinen, welche mit einer Datenzentrale über ein solches vorgenanntes MODEM kommunizieren sollen.

Die Figur 1 zeigt ein Blockschaltbild einer Frankiermaschine mit erfindungsgemäßer MODEM-Typ-Erkennung und Adaption. Die Frankiermaschine ist ausgerüstet mit einem Druckermodul 1 für ein vollelektronisch erzeugtes Frankierbild, mit mindestens einem mehrere Betätigungselemente aufweisenden Eingabemittel 2, einer Anzeigeeinheit 3, einem die Kommunikation mit einer Datenzentrale herstellenden internen MODEM 23 oder mit einem der externen MODEMs 24 oder 25, ggf. mit einem weiteren Eingabemittel 21 bzw. Waage 22, welche über einen Ein/Ausgabe-Steuermodul 4 mit einer Steuereinrichtung 6 gekoppelt sind und mit nichtflüchtigen Speichern 5a, 5b bzw. 9, 10 und 11 für Daten bzw. Programme, welche die variablen bzw. die konstanten Teile des Frankierbildes einschließen. Das weitere Eingabemittel 21 kann ebenfalls eine Übertragungseinrichtung (Chipkarten-Schreib/Leseeinheit oder Mobilfunkeinrichtung) enthalten. Das Ein/Ausgabe-Steuermodul 4 weist entsprechende interne und/oder externe Schnittstellen auf. Ein Charakterspeicher 9 liefert die nötigen Druckdaten für die variablen Teile des Frankierbildes zu einen flüchtigen Arbeitsspeicher 7. Die Steuereinrichtung 6 weist einen Mikroprozessor µP auf, der mit dem Ein/Ausgabe-Steuermodul 4, mit dem Charakterspeicher 9, mit dem flüchtigen Arbeitsspeicher 7 und mit nichtflüchtigen Arbeitsspeichern 5a, 5b, welche einen Kostenstellenspeicher umfassen, mit einem Programmspeicher 11, mit dem Motor einer Transport- bzw. Vorschubvorrichtung ggf. mit Streifenauslösung 12, einem Encoder (Codierscheibe) 13 sowie mit einem Uhren/Datums-Baustein 8 in Verbindung steht. Die einzelnen Speicher können in mehreren physikalisch getrennten oder in nicht gezeigter Weise in wenigen Bausteinen zusammengefaßt verwirklicht sein. Derjenige Speicherbaustein, welcher den nichtflüchtigen Arbeitsspeicher 5b umfaßt, kann beispielsweise ein EEPROM sein, der durch mindestens eine zusätzliche Maßnahme, beispielsweise Aufkleben auf der Leiterplatte, Versiegeln oder Vergießen mit Epoxidharz, gegen Entnahme gesichert wird. Ein austauschbarer Klischeespeicher ASP 10 ist vorzugweise als steckbarer EPROM-Baustein ausgebildet. In vorteilhafter Weise sind der Programmspeicher PSP 11 und der Charakterspeicher CSP 9 in einem weiteren EPROM-Baustein realisiert. Der Programmspeicher (EPROM) nimmt den größeren Teil des Programmcodes auf und stellt dem Mikroprozessor über den Mikroprozessorbus einen externen Programmcode zur Verfügung. Es sind in einem der nichtflüchtigen Speicher 5a, 5b oder 8 mindestens ein MODEM-Detekt-Speicher (MDS-Zellen) und gegebenenfalls ein MODEM-Initialisierungs-Speicher (MIS-Zellen) realisiert.

Erfindungsgemäß ist vorgesehen, daß ein Nurlesespeicher ROM mit dem Mikroprozessor 6 über einen Mikroprozessorbus verbunden ist und ein Programm sowie Programmcode zur Verfügung stellt, welche auch modemspezifischen Sendesequenzen für eine vorbestimmte Anzahl an Typen für Modems 23, 24 oder 25 umfaßt, daß die Frankiermaschine mit einem nichtflüchtigen Speicher NVM 5a oder EEPROM 5b oder einen anderen nichtflüchtigen Speicher 8 verbunden ist, der einen Speicherbereich für einen MODEM-Detekt-Speicher (MDS) aufweist, auf welchen das Programm zugreift, wobei die Frankiermaschine programmiert ist, entsprechend einem gespeicherten Modem-Typ eine Schnittstelle im Ein/Ausgabe-Steuermodul 4 und das angeschlossene Modem 23 bzw. 24 oder 25 zu initialisieren, bevor eine Datenzentrale angewählt wird. Auf diese Art und Weise erhöht sich die Vielfalt, mit der Modem-Typen angeschlossen werden können.

In der Figur 1 sind Anschlußvarianten für ein internes MODEM 23 und für ein externes MODEM 25 mit einer ausgezogenen Linie und für ein externes MODEM 24 mit einer gestrichelten Linie dargestellt. Letzteres MODEM 24 kann optional an eine vorhandene externe für die Waage vorgesehene Schnittstelle angeschlossen werden. Entsprechend der Signalsequenz wird vom Mikroprozessor 6 erkannt, ob eine Waage 22 oder das MODEM 24 sendet. Ein externes MODEM 25 besitzt einen Umschalter C für den wahlweisen Betrieb der Waage 22 oder des MODEMs 25, wobei die Umschaltung vom Mikroprozessor 6 über das Ein/Ausgabe-Steuermodul 4 gesteuert wird.

Andererseits kann zum Beispiel auch ein MODEM 23 an einer vorhandenen separaten internen Schnittstelle angeschlossen werden, was den Betrieb der Waage 22 über die externe Schnittstelle erlaubt. Entsprechend des Anschlusses an die Schnittstelle des Ein/Ausgabe-Steuermoduls 4 und der beantworteten Signalsequenz wird vom Mikroprozessor 6 erkannt, ob und welcher MODEM-Typ angeschlossen ist. Die Daten können über MODEM zur Datenzentrale übertragen bzw. von der Datenzentrale zurück übertragen werden, nachdem der Typ des MODEMs 23 oder 24 oder 25 vom Mikroprozessor 6 erkannt und die entsprechende Schnittstelleninitialisierung und das Anwählen der Datenzentrale durchgeführt sowie die Kommunikationsverbindung aufgenommen worden ist.

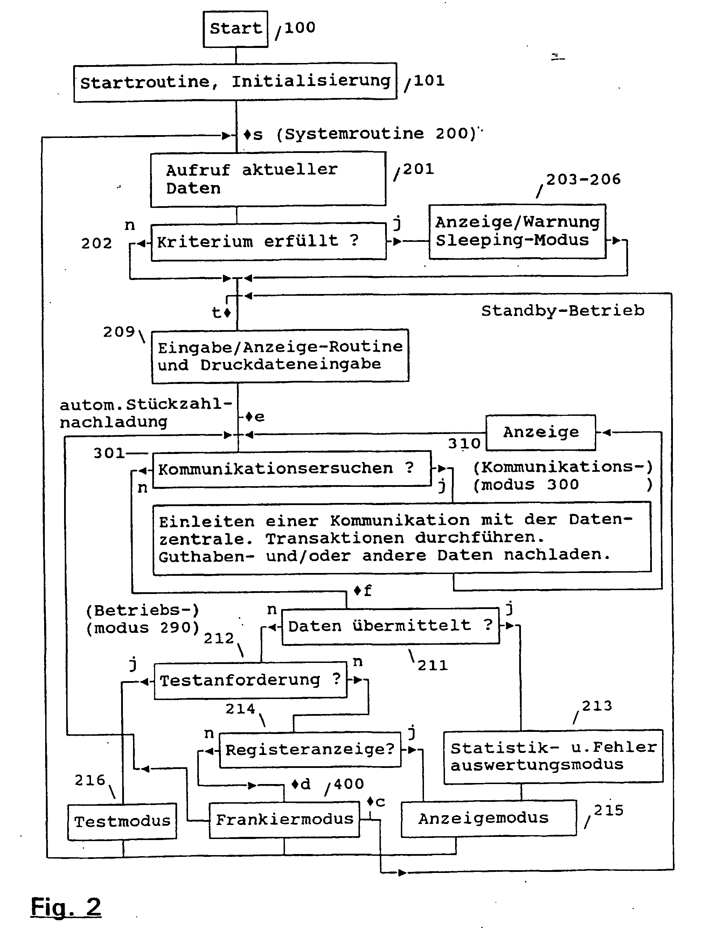

Die Figur 2 zeigt einen Gesamtablaufplan für die Steuerung einer Frankiermaschine die eine MODEM-Typ-Erkennung mit entsprechender Schnittstelleninitialisierung, Initialisieren des MODEMS entsprechend des MODEM-Typs und das Anwählen der Datenzentrale sowie die Kommunikationsverbindungsaufnahme im Kommunikationsmodus 300 einschließt.

Nach dem Start 100 erfolgen im Schritt 101 Subschritte einer Startroutine und zur Initialisierung der Frankiermaschine, um dann eine Systemroutine 200 zu erreichen. Beim Übergang in die Systemroutine 200 wird - wie in der Figur 2 dargestellt - nach einem Schritt 201 zum Datenaufruf, insbesondere von Sleeping-Mode-Stückzahldaten, zunächst im Schritt 202 überprüft, ob die Kriterien für den Eintritt in den Sleeping-Mode erfüllt sind. Ist das der Fall wird zum Schritt 203 verzweigt, um mindestens eine Warnung mittels der Anzeigeeinheit 3 anzuzeigen. Dabei können weitere Schritte 204 bis 206 durchlaufen werden, bevor zum Schritt 209 verzweigt wird. Ist das aber nicht der Fall wird ebenfalls zum Schritt 209 verzweigt. Nach den Schritten wird in jedem Fall der Punkt t erreicht.

Nach erfolgter Neueingabe im Verlauf einer Eingabe/Anzeige-Routine, die auch eine Druckdatenzusammenstellung und Aufruf der erforderlichen Bildpunktdateien im Schritt 209 einschließt, wird unter der Voraussetzung, daß keine relevante Mängel festgestellt wurden, nun der Punkt e, d. h. der Beginn eines Kommunikationsmodus 300 erreicht. Dazu wird in einem Schritt 301 abgefragt, ob ein Transaktionsersuchen vorliegt. Ist das nicht der Fall, wird der Kommunikationsmodus 300 verlassen und der Punkt f, d.h. der Betriebsmodus 290 erreicht. Wurden relevante Daten im Kommunikationsmodus übermittelt, dann ist zur Datenauswertung auf den Schritt 213 zu verzweigen. Weiterhin ist vorgesehen, daß im Schritt 213 eine Statistik- und Fehlerauswertung durchgeführt wird, um weitere aktuelle Daten zu gewinnen, welche nach Verzweigung zur Systemroutine 200 in Schritt 201 ebenfalls aufrufbar sind. Wurden keine relevante Daten im Kommunikationsmodus übermittelt und im Schritt 211 wird die Nichtübermittlung festgestellt, ist zwecks Überprüfung weiterer Bedieneingaben auf den Schritt 212 zu verzweigen. Nun wird überprüft, ob entsprechende Eingaben getätigt worden sind, um bei Testanforderung 212 in den Testmodus 216, anderenfalls um bei beabsichtigter Registerstandüberprüfung 214 in einen Anzeigemodus 215 zu gelangen. Ist das nicht der Fall, wird automatisch der Punkt d, d.h. der Frankiermodus 400 erreicht. Sind alle Spalten eines Druckbildes gedruckt worden, wird wieder zur Systemroutine 200 (Punkt s) zurückverzweigt.

Der Standby-Modus wird erreicht, wenn eine vorbestimmte Zeit keine Eingabe- bzw. Druckanforderung erfolgt. Letzteres ist der Fall, wenn ein an sich bekannter - nicht näher dargestellter - Briefsensor keinen nächsten Briefumschlag ermittelt, welcher frankiert werden soll. Der - in der Figur 2 gezeigte - Frankiermodus 400 umfaßt daher eine Abfrage eines Schleifenzählers bzw. eine Abfrage nach einem Zeitablauf, welche bei Zeitüberschreitung letztendlich wieder auf den Punkt t und damit auf die Eingaberoutine gemäß Schritt 209 führt. Wird das Abfragekriterium erfüllt, wird ein Standby-Flag gesetzt und direkt auf den Punkt s zur Systemroutine 200 oder zum Punkt t zurückverzweigt, ohne daß die Abrechnungs- und Druckroutine im Frankiermodus 400 durchlaufen wird. Das Standby-Flag wird später im Schritt 211 abgefragt und nach der Checksummenprüfung im Schritt 213 zurückgesetzt, falls kein Manipulationsversuch erkannt wird. Das Abfragekriterium in Schritt 211 wird dazu um die Frage erweitert, ob das Standby-Flag gesetzt ist, d.h. ob der Standby Modus erreicht ist. In diesem Fall wird ebenfalls auf den Schritt 213 verzweigt. Der Vorteil dieses Verfahrens in Verbindung mit dem ersten Modus besteht darin, daß der Manipulationsversuch statistisch im Schritt 213 erfaßt wird.

War die zum Frankieren vorbestimmte Stückzahl bei der vorhergehenden Frankierung verbraucht, d.h. ist die Stückzahl gleich Null, liegt ein Transaktionsersuchen automatisch vor und es wird vom Frankiermodus 400 zum Punkt e verzweigt, um in den Kommunikationsmodus 300 einzutreten, damit in Abstimmung mit der Datenzentrale eine neue vorbestimmte Stückzahl S wieder nachgeladen wird. Im Falle eines automatischen Verzweigens zum Punkt e wird die erforderliche Tastenbetätigung vom Mikroprozessor 6 simuliert, um in eine Kommunikation mit der Datenzentrale einzutreten.

Wird der Punkt e, d.h. der Beginn des nachfolgend erläuterten Kommunikationsmodus 300 erreicht, wird im Schritt 301 abgefragt, ob ein Transaktionsersuchen vorliegt. Ein solches kann beispielsweise zur Guthaben- und Stückzahlnachladung oder Aktualisierung anderer relevanter Daten gestellt werden.

Für ein manuelles Transaktionsersuchen wählt der Benutzer den Kommunikations- bzw. Fernwertvorgabemodus der Frankiermaschine über die Eingabe der Identifikationsnummer (achtstelligen Portoabrufnummer) und über die Betätigung einer ersten vorbestimmten Taste (Portowert-Taste) an. Ist der gewünschte Eingabeparameter richtig angezeigt, wird dies durch erneutes Betätigen der vorbestimmten ersten oder einer zweiten vorbestimmten Taste (R-Taste) des Eingabemittels 2 bestätigt. Anderenfalls wird vor einer Bestätigung der Eingabeparameter bei Bedarf editiert. In der Anzeigeeinheit 3 erscheint dann eine Darstellung entsprechend der Eingabe.

Durch Betätigung der zweiten vorbestimmten R-Taste wird die Übertragung des Eingabeparameters über MODEM-Verbindung gestartet, nachdem die Eingabe überprüft worden ist. Der weitere Vorgang läuft automatisch ab, wobei der Ablauf durch eine entsprechende Anzeige begleitet wird.

Es ist vorgesehen, daß eine während der Kommunikation mit verschlüsselten Meldungen durchgeführte Transaktion einen Vorgabewert für einen Guthabennachladewert umfaßt, welcher der entfernten Datenzentrale übermittelt wird und/oder daß eine andere während der Kommunikation mit verschlüsselten Meldungen durchgeführte Transaktion eine spezifische Stückzahl S' für einen Sleeping-Mode umfaßt.

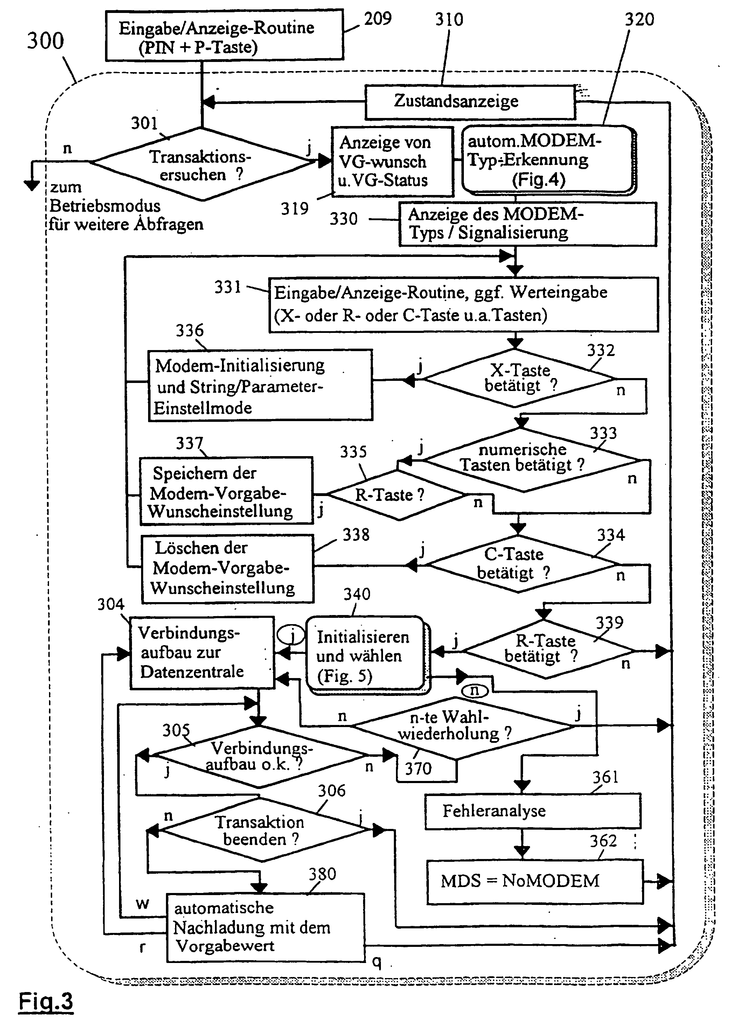

In der Figur 3 ist ein Detail des Ablaufplanes für die Steuerung der Frankiermaschine, beim Erreichen des Kommunikationsmodus zur MODEM-Typ-Erkennung dargestellt. Aus dem Betriebsmodus wird die Frankiermaschine in den Kommunikationsmodus 300 durch eine Eingabe der Portoabrufnummer PAN bzw. Identifizierungnummer PIN und Bestätigung mittels einer ersten vorbestimmten Taste des vorgenannten Eingabemittels 2 umgeschaltet. Die Frankiermaschine erkennt damit ein Transaktionsersuchen und schaltet in den Kommunikationsmodus 300.

Erfindungsgemäß ist vorgesehen, daß der Mikroprozessor der Frankiermaschine programmiert ist, nach dem Eintritt in einen Kommunikationsmodus vor dem Initialisieren des angeschlossenen Modems in einem Schritt 340 den Modem-Typ festzustellen, anhand einer in einem Speicherbereich für einen MODEM-Detect-Speicher (MDS) in einem nichtflüchtigen Speicher gespeicherten Information, auf welche das Programm zugreift, wobei eine Erkennungs-prozedur im Schritt 320 für den Modem-Typ mit Abspeicherung einer entsprechenden Information über den Modem-Typ vor dem Initialisieren des angeschlossenen Modems entsprechend dem gespeicherten Modem-Typ nur ausgeführt wird, wenn im Subschritt 3250 zuvor erkannt wird, daß im MODEM-Detect-Speicher (MDS) keine entsprechende Information über den Modem-Typ eingespeichert war.
Wenn eine automatische Prüfung gültige Daten erkannt hat, erfolgt nach der MODEM-Typ-Erkennung und ggf. einem MODEM-Vorgabe-Wert-Einstell-Modus eine Schnittstellen-Initialisierung sowie erfindungsgemäß die MODEM-Initialisierung und dann ein automatisches Anwählen der Datenzentrale vor einem Aufbau der Kommunikationsverbindung.

Ein Nachladevorgang kann in einer Transaktion mit dem Nachladewert entsprechend dem Wertvorgabewunsch, der bereits früher in einem MODEM-Vorgabe-Wert-Einstell-Modus eingegeben und nichtflüchtig gespeichert wurde, durchgeführt werden. Wenn im Rahmen einer vorausgehenden Eingabe und Anzeigeroutine die vorgenannte oder eine andere spezielle Taste des vorgenannten Eingabemittels 2 entsprechend betätigt wurde, d.h. ohne vorhergehende Transaktion zur Änderung des Wertvorgabewunsches, wird eine Transaktion mit dem Nachladewert entsprechend dem früheren Wertvorgabewunsch bewirkt.

Gemäß der Figur 2 wird der Frankiermodus 400 nach Durchlaufen von weiteren Abfrageschritten 211, 212 und 214 zur Erkennung von erfüllten Kriterien oder Dateneingaben, welche im Ablauf nach der Durchführung des Kommunikationsmodus liegen, erreicht, um dann über die Systemroutine 200 und einer Eingabe und Anzeigeroutine mit Druckdateneinfügung im Schritt 209 wieder auf den Abfrageschritt 301 zur Erkennung eines Transaktionsersuchens zu verzweigen. Nach der Eingabe der PIN und Betätigen der ersten vorbestimmten 'Portowert'-Taste im Schritt 209 wird das Transaktionsersuchen im Schritt 301 erkannt und neben dem gespeicherten letzten Vorgabewert bzw. -Wunsch wird der Fern-Wert-Vorgabestatus '1' im Schritt 319 angezeigt.

In der gegenüber EP 660 269 modifizierten Ausführungsvariante erfolgt eine MODEM-Fern-Wert-Vorgabe im Schritt 380, falls im vorgelagerten Schritt 306 nicht die Beendigung der Transaktion festgestellt und zur Zustandsanzeige zum Schritt 310 zurückverzweigt wurde. Vor diesen Schritten, wird die erfindungsgemäße Routine 320 zur MODEM-Typ-Erkennung durchlaufen und ein Schritt 331 erreicht, in welchem eine für die automatische Nachladung erforderliche Vorgabe-Wert-Einstellung bzw. Vorgabe-Wert-Bestätigung (Schritte 331 und 333 bis 339) oder Einstellung von variablen Initialisierungsstrings bzw. -Parametern (Schritte 331, 332, 336) vorgenomen werden kann. Erfindungsgemäß wird eine Möglichkeit im Schritt 336 vorgesehen, in einen Einstellmode für die variablen Initialisierungsstring bzw. -Parameter umzuschalten. Eine Umschaltung in den Einstellmode für die variablen Initialisierungsstrings bzw. -Parameter im Schritt 336 wird durch ein Betätigen einer dritten vorbestimmten 'X'-Taste statt der zweiten vorbestimmten R-Taste erreicht, wobei entweder das Betätigen im Schritt 332 festgestellt oder zum Schritt 333 verzweigt wird. Die Werteinstellung im Schritt 333 erfolgt mittels der numerischen Tasten des Eingabemittels 2 muß mit der zweiten vorbestimmten R-Taste im Schritt 335 abgeschlossen bzw. bestätigt werden, um ein Speichern der MODEM-Vorgabe-Wunscheinstellung in der Frankiermaschine zu veranlassen. Anderenfalls wird auf den Schritt 334 verzweigt. Wenn bei der Eingabekontrolle über das Display Eingabefehler sichtbar sind, kann durch im Schritt 334 festgestelltes Drücken der vierten vorbestimmten 'C'-Taste im Schritt 338 die Eingabe des Wertes bzw. MODEM-Vorgabe-Wunsches gelöscht werden. Kann von der Frankiermaschine nach Durchlaufen der Schritte 339 und 339 keine gültige Eingabe bzw. Bedienhandlung festgestellt werden, dann wird auf eine Zustandanzeige im Schritt 310 zurück verzweigt. Nach Ausführung der Schritte 336, 337 oder 338 wird auf den Schritt 331 zurück verzweigt. Wird im Schritt 339 erkannt, daß die zweite vorbestimmte R-Taste betätigt wurde, prüft die Frankiermaschine im - in der Figur 3 gezeigten - Schritt 340, ob ein gespeicherter MODEM-Typ angesprochen und initialisiert wird, bevor ein Schritt 304 zur Errichtung einer Kommunikationsverbindung zur Datenzentrale erreicht wird. Ist kein MODEM angeschlossen oder betriebsbereit, wird vom Schritt 340 über die Schritte 361 oder 362 auf den Schritt 310 verzweigt, um anzuzeigen, daß ein Modeminitialisierungsfehler (Hardware oder Software-Fehler) vorliegt bzw. um anzuzeigen, daß ggf. das Transaktionsersuchen wiederholt werden muß. Anderenfalls liest die Frankiermaschine die Wahlparameter, bestehend aus den Herauswahlparametern (Haupt-/Nebenstelle, usw.) und der Telefonnummer aus einem NVRAM-Speicherbereich F und sendet diese an das Modem 23 bzw. 24 oder 25. Anschließend erfolgt im Schritt 304 der für die Kommunikation über das MODEM 23 bzw. 24 oder 25 mit der Datenzentrale erforderliche Verbindungsaufbau und dessen Prüfung in einem Schritt 305. Bei fehlender Verbindung wird zur Wahlwiederholung über den Schritt 370 auf den Schritt 304 zurückverzweigt. Nach Feststellung im Schritt 370 einer vorbestimmten Anzahl n ergebnisloser Wahlwiederholungen zwecks Verbindungsaufbau wird über einen Anzeigeschritt 310 auf den Punkt e zurückverzweigt.

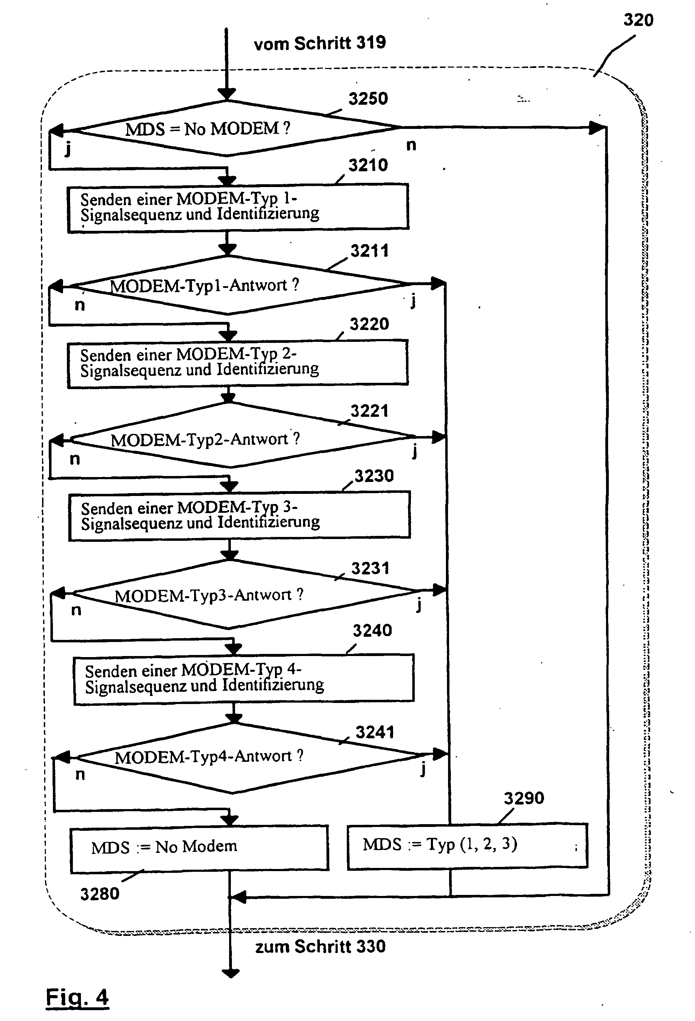

In der Figur 4 ist ein Ablaufplan für die MODEM-Typ-Erkennung gemäß Schritt 320 genauer dargestellt. Ein Teil der zum Betrieb einer Frankiermaschine benötigte Programmcode liegt im Programmspeicher-EPROM (PSP 11) gespeichert vor. Über den Mikroprozessorbus wird Programmcode dem Mikroprozessor zur Verfügung gestellt. Ein zum Betrieb einer Frankiermaschine mit MODEM-Typ-Erkennung benötigter Progammcode wird nach dem Abfrageschritt 301 aufgerufen, d.h. wenn ein durch Tastatureingabe verursachtes manuelles oder wenn ein durch Erreichung des im Frankiermodus abgefragten Stückzahlkriteriums verursachtes automatisches Transaktionsersuchen festgestellt wird. Im nichtflüchtigen Speicher NVM 5a oder EEPROM 5b oder in einem anderen nichtflüchtigen Speicher (beipielsweise im Uhren/Datums-Baustein 8) ist ein Speicherbereich für einen MODEM-Detect-Speicher (MDS) ausgebildet, auf welchen das Programm zugreift. Im Schritt 320 automatische MODEM-Typ-Erkennung kann somit ein in der Frankiermaschine implementiertes Softwareprogramm durchgeführt werden, welches vor einer Fernwertvorgabe über eine V24-Schnittstelle nacheinander modemspezifische Sendesequenzen an das Modem schickt und die modemspezifische Antwort erwartet. Durch Vergleich der Übereinstimmung von Soll- und Ist-Antwort wird der Modemtyp detektiert.

Zunächst wird im Schritt 3250 geprüft, ob die Durchführung einer Erkennungsprozedur zur MODEM-Typ-Erkennung erforderlich, d.h. ob der Eintrag im Speicher MDS = No Modem ist. Ist dies der Fall, wird im Schritt 3210 eine vorbestimmte erste MODEM-Typ-Identifizierung vorgenommen, indem an das MODEM vom Mikroprozessor 6 eine erste Signalsequenz gesendet und bei Erkennung durch das MODEM ein Antwortsignal ausgelöst wird, welches vom Mikroprozessor 6 ausgewertet wird. Im Schritt 3211 wird geprüft, ob eine Identifizierung des ersten MODEM-Typs vorliegt. Ist das der Fall, wird auf den Schritt 3290 verzweigt. Anderenfalls wird auf den Schritt 3220 verzweigt.

Im Schritt 3220 wird eine vorbestimmte zweite MODEM-Typ-Identifizierung vorgenommen, indem an das MODEM vom Mikroprozessor 6 eine zweite Signalsequenz gesendet und bei Erkennung durch das MODEM ein Antwortsignal ausgelöst wird, welches vom Mikroprozessor 6 ausgewertet wird. Im Schritt 3221 wird geprüft, ob eine Identifizierung des zweiten MODEM-Typs vorliegt. Ist das der Fall, wird auf den Schritt 3290 verzweigt. Anderenfalls wird auf den Schritt 3230 verzweigt.

Im Schritt 3230 wird eine vorbestimmte dritte MODEM-Typ-Identifizierung vorgenommen, indem an das MODEM vom Mikroprozessor 6 eine dritte Signalsequenz gesendet und bei Erkennung durch das MODEM ein Antwortsignal ausgelöst wird, welches vom Mikroprozessor 6 ausgewertet wird. Im Schritt 3231 wird geprüft, ob eine Identifizierung des dritten MODEM-Typs vorliegt. Ist das der Fall, wird auf den Schritt 3290 verzweigt. Anderenfalls wird ggf. über weitere Schritte 3240, 3241 auf den Schritt 3280 verzweigt.

Auf diese Art und Weise fortgesetzt, kann eine Erkennung auf der Basis von mehreren gespeicherten MODEM-typischen Sequenzen durchgeführt werden, wobei im Schritt 3290 der entsprechende Typ (beispielsweise 1, 2 oder 3) im nichtflüchtigen Speicher der Frankiermaschine eingetragen wird. Diese Information wird gespeichert, damit dann vor weiteren Fernwertvorgaben per MODEM ggf. auf die Erkennungsprozedur verzichtet werden kann.

Es wird dann im Schritt 340 (Figur 3) der Programmcode für die modemspezifischen Ansteuersequenzen (Grundinitialisierung, Verbindungsaufbau) entsprechend des erkannten MODEM-Typs verwendet. In einer Variante wird der Inhalt des Programmspeichers PSP für die Grundinitialisierung und den Verbindungsaufbau verwendet. In einer anderen Variante wird ausschließlich der Inhalt des Speichers MIS für die Grundinitialisierung und den Verbindungsaufbau verwendet.

Beim Erreichen des Schrittes 3280 wird beispielsweise ein No-MODEM-Typ detektiert, welcher hier beispielsweise für ein nicht bekanntes Modem steht. In einen MODEM-Detekt-Speicher (MDS) wird somit die Information No Modem eingetragen.

Die Modemtyperkennung 320 wird nach Eintritt in den Kommunikationsmodus 300 zu Beginn der Fernwertvorgabeprozedur aufgerufen. Dazu wird erst gepüft, ob in die MODEM-Detekt-Speicherzelle die Information No Modem eingetragen bzw. ob die Information zum Modem-Typ 1, 2, 3,...., gelöscht wurde oder ob der MODEM-Typ gespeichert vorliegt. Das soll in der Grundinitialisierung beispielsweise im Herstellerwerk der Frankiermaschine (beispielsweise mittels Reset-Eprom) ausgeführt werden. Eine nicht gelöschte MODEM-Detekt-Speicherzelle enthält beispielsweise die Information zum Modem-Typ 1, 2 oder 3 und bewirkt damit ein Überspringen der Erkennungsprozedur, da davon ausgegangen wird, daß eine solche bereits zu einem früherem Zeitpunkt ausgeführt wurde.

Eine gelöschte MODEM-Detekt-Speicherzelle bzw. mit dem Eintrag der Information No Modem, ruft das Modem-Typ-Erkennungsprogramm auf, in welchem - wie in Fig. 4 gezeigt - beispielsweise nacheinander drei modemspezifische Ansteuersequenzen aufgerufen werden können oder geprüft wird, ob im Modem-Initialisierungs-Speicher MIS Werte eingetragen sind.

In den Modemerkennungsprozeduren wird an das Modem eine Steuersequenz gesendet, die für eine positive Erkennung innerhalb einer begrenzten Zeit vom Modem spezifisch beantwort werden muß. Die modemspezifische Antwort der *Modemtypen 1* und *2* ist eine vom Frankiermaschinenhersteller definierte und im Modem fest abgelegte Sequenz. Der *Modemtyp 3 bzw. 4* steht für vorbestimmte bzw. variable Modemkonfiguration und der *Modemtyp 5* steht für einen nicht erkannten Modemtyp bzw. für No MOdEM.

Nach seiner Erkennung kann der Modemtyp auf dem Display angezeigt werden. Unter gleichzeitiger akustischer Signalisierung beispielsweise mittels Beeper und kann vorzugsweise "MOdEM 1" für eine vorbestimmte Zeitdauer von einer Sekunde im Schritt 330 angezeigt werden (Fig. 3).

Danach wird beginnend mit Schritt 331 zur Eingabe und Anzeige in der eigentlichen Fernwertvorgabeprozedur aufgerufen, in der nach der Eingabeabfrage (Schritte 332 bis 339) in einem Schritt 340 modemspezifische Initialisierungssequenzen über die zugehörige V24-Schnittstelle gesendet und die für die Grundinitialisierung und im Schritt 304 für den Verbindungsaufbau des Modems erforderlichen modemspezifischen Programmfunktionen ausgeführt werden.

Das Einbinden einer variablen Modemkonfiguration für *Modemtyp 4* in die Modemtyperkennung für ein externes Laden, setzt voraus: Die Modems müssen vor einer Verbindungsaufnahme an die Hardwaregegebenheiten der V24-Schnittstelle, das Übertragungsverfahren, das erwünschte Benutzerverhalten, läderspezifische Erfordernisse und das erwünschte Softwareverhalten angepaßt werden, indem das Modem über die V24-Schnittstelle die entsprechenden Konfigurationskommandos erhält.

In herkömmlichen Anwendungen ist dieses Konfigurationsprofil in einer ersten Variante in einem nichtflüchtigen Speicher in den Modems enthalten, welches mit Bezug auf Werte, d.h. werteseitig, oder mit Bezug auf den Benutzer, d.h. benutzerseitig, abgespeichert ist und nach jedem RESET aktiviert wird. In einer zweiten Variante wird vor dem Wahlkommandostring das Konfigurationsprofil mit entsprechenden Kommandos an das Modem übertragen.

Modems unterschiedlicher Hersteller unterscheiden sich mitunter durch einen unterschiedlich implementierten Befehlssatz. Durch stetig wachsende Anforderungen an Modems ist in der Zukunft eine Erweiterung der Befehlssätze notwendig, die dann teilweise hersteller-abhängig benutzt werden. Um das Verfahren der automatischen Modemerkennung für extern anzuschließende Modems zukunftssicher zu gestalten, wird erfindungsgemäß bei einem *Modemtyp 4* der Modem-typerkennung eine Anpassung des Konfigurationsstrings durch den Bediener oder Servicetechniker vorgenommen. Die Frankiermaschine muß dazu nicht geöffnet werden, um diese beispielsweise mit einem neuen Programm (ROM) auszurüsten.

Die Eingabe der variablen Konfigurationskommandos kann auf mindestens zwei Arten erfolgen:
1. Master/Techiker-EPROM,
2. manuelles Eingabeverfahren.

Bei der ersten Art ist in einem Master/Techiker-EPROM das Konfigurationskommando enthalten. Dieser EPROM wird in bekannter Weise bereits als Betätigungsmittel genutzt, um die erste Initialisierung einer Frankiermaschine durchzuführen, wobei beispielsweise eine Telefonnummer in den nichtflüchtigen Speicher NVRAM der Frankiermaschine eingespeichert wird. Zusätzlich wird automatisch mit dem vorgenannten Abspeichern der Telefonnummer nun der Konfigurationsstring vom Master/Techiker-EPROM in den speziellen Speicherbereich MIS des vorgenannten NVRAMs eingespeichert.

Bei der zweiten Art, d.h. beim manuellen Eingabeverfahren, umfassen die Modemkommandos den gesamten ASCII-Zeichensatz. Mit einem Betätigungsmittel des Eingabemittels 2, beispielsweise einer dritten vorbestimmten X-Taste des Tastaturfeldes, wird im Schritt 332 auf eine Möglichkeit umgeschaltet, im Schritt 336 die erforderlichen maximal 128 Zeichen einzugeben (Fig.3). Die Bedienung sieht also nach der PIN-Eingabe eine Bestätigung mit der ersten vorbestimmten P-Taste und nach einer entsprechenden Anzeige die Betätigung der dritten vorbestimmten X-Taste vor. Die Kommandos werden dann als 3-stellige Dezimalzahlen eingegeben und eine Betätigung einer weiteren vorbestimmten Taste bewirkt eine Übernahme (Enter-Effekt) und markiert die Zeichentrennung. Die Zeichentrennung zwischen den Dezimaleingaben in einer ASCII-Zeichenkette wird beispielsweise mit der zweiten vorbestimmten R-Taste unter Anzeige eines Bindestrichs vorgenommen (Beispiel: 092-078-031 für die Zeichenkette \N1). In einer anderen Variante kann der Bindestrich durch Punkt ersetzt werden, womit eine zehnstellige Anzeigeeinheit zur Anzeige der eingegebenen Zeichenkette ausreicht. Mit der Betätigung der ersten vorbestimmten P-Taste wird der gesamte Zahlenstring in eine ASCII-Zeichenkette umgewandelt und in den Modem-Initialisierungs-Speicher (MIS) des nichtflüchtigen Speichers 5a (NVRAM) übertragen.

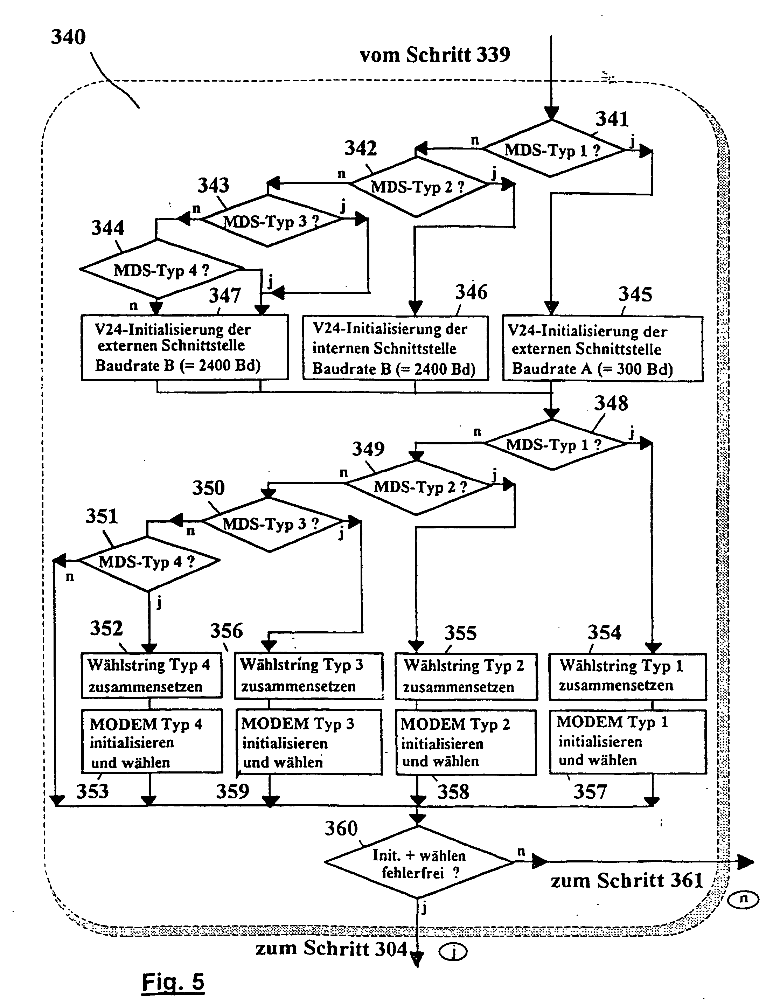

Im Falle einer anhand der Figur 5 beschriebenen Modem-Initialisierung eines externen detektierten Modems wird diese ASCII-Zeichenkette in die Konfigurationsanweisung, die zum Modem übertragen wird, eingebaut. Ein Kommandosatz für eine solche Konfigurationsanweisung besteht vorzugsweise aus fünf Teilen K1 bis K5:

| Kommandosatz-Teil | Kurzbezeichnung | gespeichert im |
|---|---|---|
| K1 | Standard-Initialisierung | PSP (ROM) |
| K2 | variable Konfiguration | MIS im NVRAM |
| K3 | Wahlkommando | PSP (ROM) |
| K4 | Wahlparameter | Bereich F im NVRAM |
| K5 | Telefon-Nummer | Bereich F im NVRAM |

In der Figur 5 ist ein Ablaufplan für die Initialisierung der Schnittstelle und des Modems und für das Anwählen der Datenzentrale gemäß dem Schritt 340 genauer dargestellt. Entsprechend des in der Figur 3 gezeigten Detail des Gesamtablaufplanes beim Erreichen des Kommunikations-modus 300 erfolgt innerhalb des Schrittes 340 ein Prüfen seitens der Frankiermaschine in einem Subschritt 360, ob das Initialisieren des MODEMs und das Anwählen der Datenzentrale fehlerfrei durchgeführt werden konnte, um im nachfolgenden Schritt 361 den Fehlerfall zu analysieren, beispielsweise ob ein MODEM nicht angeschlossen oder nicht betriebsbereit ist. Im Fehlerfall wird vom Subschritt 360 über den vorgenanten Schritt 361 zur Fehleranalyse und über einen Schritt 362 zum Einspeichern des Zustandes als MODEM-Typ 5 bzw. No ModEM auf den Schritt 310 zurückverzweigt, um anzuzeigen, daß ein Hardware-Fehler (wenn kein MODEM angeschlossen ist) bzw. ein defektes MODEM oder daß ein Software-Fehler vorliegt (wenn das MODEM nicht betriebsbereit ist). Bei Fehlerfreiheit wird vom Prüfschritt (Subschritt 360) auf einen Schritt 304 zur Errichtung einer Kommunikationsverbindung zur Datenzentrale verzweigt.

Eine Abfrage des MODEM-Detekt-Speichers MDS wird seitens der Frankiermaschine in Schritten 341, 342, 343, 344, hinsichtlich einer Prüfung des Modem-Typs durchgeführt, um die entsprechende V24-Hardware-Schnittstelle zu initialisieren und um zu weiteren Abfrageschritten 348 bis 351 zu verzweigen.
In der Figur 5 sind die Abfrageschritte 343 und 344 eingezeichnet, um die Möglichkeit einer Erweiterung des Ablaufes auf eine größere Anzahl von Modemtypen zu eröffnen. Im Schritten 341 wird eine Prüfung des Modem-Typs 1 durchgeführt, um bei Erkennung dieses Modemtyps auf einen Initialisierungs-Schritt 345 zu verzweigen. Im Schritten 342 wird eine Prüfung des Modem-Typs 2 durchgeführt, um bei Erkennung dieses Modemtyps auf einen Initialisierungs-Schritt 346 zu verzweigen. In einer bevorzugten Ausführungsform kann auf die Abfrageschritte 343 und 344 verzichtet werden, da ohnehin auf den Initialisierungs-Schritt 347 zu verzweigen ist, wenn Modem-Typs 3 oder 4 vorliegt.

Es ist vorgesehen, daß der Mikroprozessor 6 der Frankiermaschine programmiert ist, in einem Schritt 345, 346 oder 347 eine Schnittstellen-Initialisierung auf vorbestimmte Weise entsprechend vorzunehmen.

Vorzugsweise ist weiterhin vorgesehen, daß dabei die V24-Schnittstellen-Initialisierung zugeordnet zum erkannten Modem-Typ und/oder entsprechend zugeordnet einer Anordnung an einer vorbestimmten Schnittstelle eines Ein/Ausgabe-Steuermoduls 4 der Frankiermaschine als externes oder internen Modem und/oder entsprechend zugeordnet zur entsprechenden Baudrate des Modem-Typs durchgeführt wird, wobei die Zuordnung in einem Speicherbereich nichtflüchtig gespeichert ist.

Nach der Schnittstellen-Initialisierung werden die jeweiligen Abfrageschritte 348, 349 oder 351 für den jeweiligen Modem-Typ erreicht. Danach wird vom Mikroprozessor modemspezifisch nach einem Programm weiter verfahren. Der Mikroprozessor 6 der Frankiermaschine ist programmiert, in einem Schritt 348, 349, 350 oder 351 den Modem-Typ zu ermitteln und in einem Schritt 354, 355, 356 oder 352 einen entsprechenden Wählstring zusammenzusetzen, um die Datenzentrale anzuwählen, sowie programmiert ist, vor einem Wählen entsprechend des MODEM-Typs in einem Schritt 357, 358, 359 oder 353 den MODEM typgemäß zu initialisieren.

Kann keine Zuordnung zu den in der Frankiermaschine gespeicherten Modemtypen festgestellt werden, wird vom Abfrageschritt zum Modemtyp 4 (Schritt 351) direkt über den weiteren Fehler-Abfrageschritt 360 zur Fehleranalyse im Schritt 361 verzweigt, in welchen aufgrund weiterer gespeicherter oder detektierter Daten festgestelt wird, ob ein Hardware oder Software-Fehler vorliegt.

In einer Ausführungsvariante des Verfahrens zur automatischen Modem-Typerkennung innerhalb eines Kommunikationsmodus, ist der Mikroprozessor 6 der Frankiermaschine so programmiert, daß er in einem Schritt 320 den Modem-Typ ausschließlich anhand der in einem Speicherbereich für einen MODEM-Detect-Speicher (MDS) im nichtflüchtigen Speicher NVM 5a oder EEPROM 5b oder einem anderen nichtflüchtigen Speicher 8 gespeicherten Information, auf welche das Programm zugreift, feststellt.

Die Frankiermaschine ist so programmiert, entsprechend dem gespeicherten Modem-Typ eine Schnittstelle im Ein/Ausgabe-Steuermodul 4 und das angeschlossene Modem 23, 24, 25 zu initialisieren, bevor eine Datenzentrale angewählt wird. Beim Erreichen des Kommunikationsmodus 300 erfolgt seitens der Frankiermaschine im Subschritt 360 ein Prüfen, ob ein MODEM angeschlossen und betriebsbereit ist (positiver Fall), bevor im positiven Fall ein Schritt 304 zur Errichtung einer Kommunikationsverbindung zur Datenzentrale erreicht wird.

Wie vorstehend anhand der Fig. 3 erläutert, kann nach der Eingabe der PIN und Betätigen der ersten vorbestimmten 'Portowert'-Taste die PIN und im Schritt 319 der gespeicherte Vorgabewert und der Vorgabestatus '1' und im Schritt 330 ggf. "MOdEM 1" für eine Zeitdauer von mindestens eines Zeitraumes (Sekunden) angezeigt werden, während dessen die Prozedur arbeitet. Im Schritt 331 kann eine Eingabe mit entsprechender Anzeige vorgenommen werden.

In einer in den Figuren nicht näher dargestellten Ausführungsvariante mit mehreren Fern-Wert-Vorgabe-Varianten erfolgt anschließend nach der Eingabe der PIN und Betätigen der ersten vorbestimmten 'Portowert'-Taste ein Erkennen des Transaktionsersuchens. Vor dem Erkennen des MODEM-Typs im Schritt 320 kann ein zusätzlicher Schritt 319 durchlaufen werden. Es erfolgt nach dem Schritt 320 in einem Schritt 330a ein Betätigen der ersten vorbestimmten P-Taste, um in den ersten Kommunikationsmode mit Modemvorgabe zu gelangen, oder es erfolgt anschließend ein Betätigen der zweiten vorbestimmten R-Taste, um in den zweiten Kommunikationsmode mit Voice2-Vorgabe zu gelangen, oder es erfolgt ein Betätigen der dritten vorbestimmten 'X'-Taste, und eine entsprechende Abfrage im Schritt 332, um in den Einstellmode für variable Initialisierungsstrings und- Parameter im Schritt 336 zu gelangen.

In einer anderen Variante der Programmausführung ist vorgesehen, zusätzliche Eingaben zur Wahlparametereinstellung zur Anpassung des jeweiligen Modems an die Telefonanlage des Kunden durchzuführen. Hierzu wird vor dem Abfrageschritt 332 in der Figur 3 ein weiterer - in der Figur 3 nicht dargestellter - Abfrageschritt 332a eingefügt, für die Feststellung der Betätigung einer weiteren fünften *'*SET*'*-Taste, um in einen Wahlparameter-Einstellmodus 332b zu gelangen, von dem auf den Schritt 331 der Eingabe/Anzeige-Routine zurückverzweigt wird.

Im Einstellmode 332b für die Wahlparameter wird die gespeicherte Wahlparameterkonfiguration mit einem führenden 'd' angezeigt. Das 'd' zeigt an, daß sich die Frankiermaschine im Modus Wahlparametereingabe befindet. Entweder erfolgt die Anzeige der gespeicherten Wahlparameter und deren Änderung, wofür eine vierte vorbestimmte 'C'-Taste zu betätigen ist, oder nach dem Betätigen der fünften vorbestimmten 'SET-Taste gelangt die Frankiermaschine wieder zurück zum Schritt 331. Beim Ändern der gespeicherten Wahlparameter durch Drücken der vierten vorbestimmten 'C'-Taste wird das Display gelöscht und linksbündig ein 'd' angezeigt. Nun kann eine neue Konfiguration eingegeben werden. Fehleingaben können mit der vierten vorbestimmten Taste 'C' gelöscht werden. Wird die vierten vorbestimmten Taste 'C' bei geleertem Display betätigt, so wird der Modus verlassen, ohne die gespeicherte Konfiguration zu ändern. Durch erneutes Drücken der fünften vorbestimmten 'SET'-Taste wird die neue Konfiguration abgespeichert und die Frankiermaschine gelangt wieder zurück zum Schritt 331.

Die Wahlparameter dienen der Anpassung des jeweiligen Modems an die Telefonanlage des Kunden. Ein kompletter Anwahlsatz besteht aus einem kundenindividuellen Wahlparameter und einer konstanten Telefonnummer. Die Wahlparameter zeigen dem Modem an, wie es eine Amtsleitung erreicht und welche Anwahlart dafür zu verwenden ist. Die Wahlparametereingabe wird vorteilhaft nach der erfindungsgemäßen Lösung bedienungsfreundlich gestaltet. Als erste Eingabe muß die Anwahlart (Puls / Ton) eingegeben werden. Die Eingabe ist im Betriebsmodus mit einem jeweils vorgesehenen Betätigungsmittel möglich, unter gleichzeitiger alphanumerische Anzeige für die Wahlparameter, beispielsweise der Anwahlarten Pulswahl 'P' oder Tonwahl 't', des Zustandes Warten auf einen Wählton 'U', des Zustandes ca. 2 Sekunden Pause '-', des Zustandes mögliche Amtsholung mit Erdtaste 'E' oder mit Flashtaste 'F*'* bzw. des Zustandes Wählen ohne Amtsholung mit Nebenstelle ohne Amts-Ton 'n' und mögliche Amtsholung mit 'O'bis '9'. Nach der Eingabe Warten auf Wählton" ist keine weitere Eingabe möglich. Es ergeben sich folgende sinnvolle Eingabebeispiele:
1). dt Hauptanschluß mit Tonwahl
2). dP Hauptanschluß mit Pulswahl
3). dt8U Nebenstelle mit Tonwahl, Herauswahl über 8, Warten auf den Wählton
4). dtF Nebenstelle mit Tonwahl, Herauswahl über Flashtaste, Pause vor Telefonnummernwahl
5). dt8-8U Nebenstelle mit Tonwahl, Herauswahl über 8, Pause, 8 und Warten auf Wählton
6). dt0n Nebenstelle mit Tonwahl, Herauswahl über 0, ein Wählton wird nicht erwartet

Es sind auch unsinnige Eingaben möglich, zum Beispiel: "dtU", "dt0nU". In einer Variante der Programmausführung ist vorgesehen, diese Eingaben mit gespeicherten Fehlereingaben zu vergleichen, um ggf. dem Bediener unsinnige Eingaben zu signalisieren bzw. um die Speicherung solcher Eingaben zu verweigern.

Manuell kann zusätzlich ebenso eine Telefonnummern-Editierung durchgeführt werden, indem über einen zusätzlichen Abfrageschritt 332c dann Editierungseingabeschritte 332d bis g erfolgen, bevor auf den Schritt 331 zurückverzweigt wird.

Weitere Eingaben bzw. Maßnahmen zur Adaption laufen analog zur Eingabe des variablen Modeminitialisierungsstrings in den MIS nach dem gleichen Verfahren ab. Nach einer Abfrage eines Eingabekriteriums, wird auf einen Programmdurchführungsschritt zur Anpassung des jeweiligen Modems an die Telefonanlage des Kunden verzweigt. Eine automatischen Anpassung wird jeweils durch Simulation der Eingabe bzw. der Tasten-Betätigung seitens des gespeicherten Programms erreicht. Es ist vorgesehen, einen Mikroprozessor 6 in einer Steuereinheit der Frankiermaschine zu programmieren, nach Simulation der Eingabe bzw. der Tasten-Betätigung eine automatischen Anpassung des jeweiligen MODEM-Typs an die Telefonanlage vorzunehmen.

## Patentansprüche

1. Verfahren zur automatischen Modemtyperkennung und Adaption innerhalb eines Kommunikationsmodus einer Frankiermaschine, welche programmiert ist, in den Kommunikationsmodus mit einer entfernten Datenzentrale einzutreten und die eine Steuereinheit mit einem Mikroprozessor (6) aufweist, wobei über eine Schnittstelle selektiv ein Modem angesteuert wird, um Daten zu übertragen und der Mikroprozessor so programmiert ist, daß das Modem initialisiert werden kann und daß nach einem automatischen Aufbau der Kommunikation und nach Ausführen der Kommunikation der Kommunikationsmodus verlassen wird, wobei
a) die Betätigung einer ersten vorbestimmten Taste (P-Taste) den Eintritt in den Kommunikationsmodus (300) auslöst,
b) im Kommunikationsmodus zunächst eine automatische Modemtyperkennung (Schritt 320) erfolgt, in dem
- in einem ersten Subschritt (3250) anhand einer in einem Speicherbereich für einen Modem-Detect-Speicher (MDS) in einem nichtflüchtigen Speicher (5a, 5b, 8) gespeicherten Information, auf welche das Programm zugreift, entweder der Modemtyp festgestellt wird oder erkannt wird, dass keine entsprechende Information über den Modemtyp eingespeichert ist und
- nur wenn im ersten Subschritt (3250) erkannt wird, dass im Modem-Detect-Speicher (MDS) keine entsprechende Information über den Modemtyp eingespeichert ist, eine Erkennungsprozedur (3210, 3211, 3220, 3221, 3230, 3231, 3240, 3241) für den Modemtyp mit Abspeicherung einer entsprechenden Information (3280, 3290) über den Modemtyp im Modem-Detect-Speicher (MDS) ausgeführt wird,
c) danach ein Anzeigen des Modemtyps (Schritt 330) auf einem Display (3) erfolgt,
d) danach eine Eingabe-/Anzeige-Routine (Schritt 331) gestartet wird,
e) anschließend in einer Abfrage (Schritt 332) festgestellt wird, ob eine dritte vorbestimmte Taste (X-Taste) betätigt wurde, und falls dies der Fall ist,
- über einen Einstellmodus für variable Initialisierungsstrings beziehungsweise Initialisierungsparameter zwecks weiterer Eingaben (Schritt 336) zum Beginn der vorgenannten Eingabe-/Anzeige-Routine (Schritt 331) zurückverzweigt wird,
während, falls dies nicht der Fall ist,
- in einer weiteren Abfrage (Schritt 339) festgestellt wird, ob eine zweite vorbestimmte Taste (R-Taste) betätigt wurde
und
f) falls die zweite vorbestimmte Taste (R-Taste) betätigt wurde, danach ein Initialisieren des angeschlossenen Modems entsprechend dem gespeicherten Modemtyp und anschließendes Wählen erfolgt (340), wobei der Mikroprozessor (6) der Frankiermaschine für eine variable Modemkonfiguration einen Wählstring zusammensetzt, der den im Einstellmodus für die variablen Initialisierungsstrings beziehungsweise Initialisierungsparameter (Schritt 336) eingegebenen, weiteren Parametern entspricht, um die entfernte Datenzentrale anzuwählen.

2. Verfahren nach Anspruch 1, wobei die Erkennungsprozedur für den Modemtyp eine Anzahl an Subschritten umfasst, wobei in der Frankiermaschine nichtflüchtig gespeicherte, modemspezifische Sendesequenzen nacheinander an das angeschlossene Modem ausgesendet werden (3210, 3220, 3230) und das Modem seine modemspezifische Antwort an den Mikroprozessor (6) der Frankiermaschine zurück sendet, und dass der Mikroprozessor (6) einen Vergleich (3211, 3221, 3231) der Antwortsignale mit gespeicherten Antwortsignalen zur automatischen Modemtyperkennung durchführt, bevor der so erkannte Modemtyp nichtflüchtig im Modem-Detect-Speicher gespeichert wird (3290).

3. Verfahren nach den Ansprüchen 1 und 2, wobei beim Anzeigen (330) des Modemtyps auf dem Display (3) eine Anzeige "ModEM 1" für eine vorbestimmte Zeitdauer unter gleichzeitiger akustischer Signalisierung erfolgt.

4. Verfahren nach den Ansprüchen 1 bis 3, wobei die Frankiermaschine innerhalb des vorgenannten Schrittes zum Initialisieren des angeschlossenen Modems (Schritt 340) prüft, ob das Initialisieren des Modems und das Anwählen der Datenzentrale fehlerfrei durchgeführt werden konnte (Subschritt 360) und von diesem Prüfen über eine Fehleranalyse (Schritt 361) auf eine Zustandsanzeige verzweigt wird (Schritt 310), um anzuzeigen, dass ein Modeminitialisierungsfehler vorliegt, wenn kein Modem angeschlossen ist oder ein Modem nicht betriebsbereit ist.

5. Verfahren nach Anspruch 4, wobei die Frankiermaschine innerhalb des vorgenannten Schrittes zum Initialisieren des angeschlossenen Modems (Schritt 340) prüft (Subschritte 341, 342, 343, 344), welcher Modemtyp im Modem Detect Speicher (MDS) gespeichert ist und der Mikroprozessor (6) der Frankiermaschine programmiert ist, eine Schnittstelleninitialisierung entsprechend des Modemtyps auf vorbestimmte Weise vorzunehmen (Subschritte 345, 346, 347) und anschließend, falls in weiteren Prüfschritten (Subschritte 348, 349, 350, 351) ein Modemtyp erkannt wurde, einen entsprechenden Wählstring zusammenzusetzen (Subschritte 352, 354, 355, 356), um die Datenzentrale anzuwählen (Subschritte 353, 357, 358, 359), beziehungsweise, falls in den weiteren Prüfschritten (Subschritte 348, 349, 350, 351) kein Modemtyp erkannt wurde, direkt über den Schritt zum Prüfen, ob das Initialisieren des Modems und das Anwählen der Datenzentrale fehlerfrei durchgeführt werden konnte (Subschritt 360), zur Fehleranalyse (Schritt 361) zu verzweigen, in welcher aufgrund weiterer gespeicherter oder detektierter Daten festgestellt wird, ob ein Hardware- oder Software-Fehler vorliegt.

6. Verfahren nach Anspruch 5, wobei der Mikroprozessor (6) der Frankiermaschine programmiert ist, innerhalb des vorgenannten Schrittes zum Initialisieren des angeschlossenen Modems (Schritt 340), nach der Prüfung, welcher Modemtyp im Modem Detect Speicher (MDS) gespeichert ist (Subschritte 341, 342), eine Schnittstelleninitialisierung gemäß einem ersten oder zweiten Modemtyp vorzunehmen, sofern einer dieser Modemtypen bei der Prüfung erkannt wurde, und anderenfalls eine Schnittstelleninitialisierung entsprechend einem dritten Modemtyp vorzunehmen.

7. Verfahren nach Anspruch 5, wobei die Schnittstelleninitialisierung zugeordnet zum erkannten Modemtyp und/oder zugeordnet zu einer vorbestimmten Schnittstelle eines Ein/Ausgabe-Steuermoduls (4) der Frankiermaschine als externes oder internes Modem und/oder zugeordnet zur entsprechenden Baudrate des Modemtyps durchgeführt wird, wobei die Zuordnung in einem Speicherbereich nichtflüchtig gespeichert ist.

8. Verfahren nach den Ansprüchen 1 bis 7, wobei der Mikroprozessor (6) der Frankiermaschine programmiert ist, innerhalb des vorgenannten Schrittes zum Initialisieren des angeschlossenen Modems (Schritt 340), in weiteren Prüfschritten (Subschritte 348, 349, 350, 351) den Modemtyp zu ermitteln und einen entsprechenden Wählstring zusammenzusetzen (Subschritte 352, 354, 355, 356), um die Datenzentrale anzuwählen, sowie vor einem Wählen das Modem entsprechend dem Modemtyp zu initialisieren.

9. Verfahren nach Anspruch 4, wobei nach der Fehleranalyse (Schritt 361) im Modem Detect-Speicher gespeichert wird, dass keine entsprechende Information über den Modemtyp vorliegt (Schritt 362), bevor auf die Zustandsanzeige (Schritt 310) verzweigt wird.

10. Verfahren nach den Ansprüchen 1 bis 9, wobei der Mikroprozessor (6) der Frankiermaschine programmiert ist, entsprechend dem gespeicherten Modemtyp eine Schnittstelle im Ein/Ausgabe-Steuermodul (4) und das angeschlossene Modem zu initialisieren, bevor die Datenzentrale angewählt wird.

11. Frankiermaschine mit einer Anordnung zur automatischen Modemtyperkennung und Adaption innerhalb eines Kommunikationsmodus (300), wobei die Frankiermaschine mit einer Steuereinheit mit einem Mikroprozessor (6) ausgestattet ist und über ein Ein/Ausgabe-Steuermodul (4) mit einem Modem und mit einem Mittel verbunden ist, um mindestens den Eintritt in den Kommunikationsmodus auszulösen, wobei über eine Schnittstelle selektiv das Modem angesteuert wird, um Daten zu übertragen, wobei die Frankiermaschine ferner mit einem nichtflüchtigen Speicher (5a, 5b, 8) und einem Nurlesespeicher (ROM 11) ausgestattet ist, welche über einen Mikroprozessorbus mit dem Mikroprozessor (6) verbunden sind, um für diesen ein Programm sowie Programmcode zur Verfügung zu stellen, womit der Mikroprozessor (6) so programmiert ist, daß das Modem initialisiert werden kann, wobei ferner
a) das Mittel, um mindestens den Eintritt in den Kommunikationsmodus auszulösen, ein Eingabemittel (2) einschließt, welches eine erste vorbestimmte Taste aufweist, wobei die Betätigung der ersten vorbestimmten Taste (P-Taste) den Eintritt in den Kommunikationsmodus auslöst,
b) der nichtflüchtige Speicher (5a, 5b, 8) einen Speicherbereich für einen Modem-Detect-Speicher (MDS) aufweist, auf welchen das Programm zur automatischen Modemtyperkennung zugreift, um entweder
- den Modemtyp festzustellen oder
- zu erkennen, dass keine entsprechende Information über den Modemtyp eingespeichert ist, wobei
für den Fall, dass erkannt wird, dass keine entsprechende Information über den Modemtyp eingespeichert ist, im Nurlesespeicher (ROM 11) auch modemspezifische Sendesequenzen für eine vorbestimmte Anzahl an Typen für Modems (23, 24 bzw. 25) gespeichert vorliegen, um eine Erkennungsprozedur zur Modemtyperkennung durchführen zu können, nach welcher eine entsprechende Information über den Modemtyp im Modem-Detect-Speicher abgespeichert wird,
c) die Frankiermaschine ein Anzeigeeinheit (3) zum Anzeigen des Modemtyps aufweist,
d) die Frankiermaschine programmiert ist, eine Eingabe-/Anzeigeroutine zu starten
e) das Eingabemittel (2) zusätzlich eine zweite und eine dritte vorbestimmte Taste aufweist, wobei
- die Betätigung der dritten vorbestimmten Taste (X-Taste) eine Umschaltung in einen Einstellmodus für die Einstellung von variablen Initialisierungsstrings beziehungsweise Initialisierungsparametern zur Editierung der Initialisierung ermöglicht, und
- die Betätigung der zweiten vorbestimmten Taste (R-Taste) das Initialisieren des angeschlossenen Modems und anschließendes Wählen bewirkt (340),
wobei
f) der Mikroprozessor (6) der Frankiermaschine programmiert ist, nach Betätigung der zweiten vorbestimmten Taste (R-Taste) eine Schnittstelle im Ein/Ausgabe-Steuermodul (4) und das angeschlossene Modem (23, 24 bzw. 25) entsprechend einem im Modem-Detect-Speicher (MDS) gespeicherten Modemtyp zu initialisieren, bevor eine Datenzentrale angewählt wird.

12. Anordnung nach Anspruch 11, wobei in einem Modem-Initialisierungsspeicher (MIS) eines nichtflüchtigen Speichers (5a, 5b, 8) der Frankiermaschine modemspezifische Sendesequenzen gespeichert vorliegen.

13. Anordnung nach Anspruch 11, wobei in einem nichtflüchtigen Speicher (5a, 5b, 8) ein Bereich für eine Sendesequenz für ein Modem für eine variable Modemkonfiguration (Modem Typ 4) vorgesehen ist.

14. Anordnung nach Anspruch 11, wobei
- die Betätigung der zweiten vorbestimmten Taste (R-Taste) einen gewünschten Eingabeparameter bestätigt,
- ein im Nurlesespeicher (ROM 11) gespeichertes Programm vorgesehen ist, welches innerhalb des Kommunikationsmodus mit dem Mikroprozessor (6) zur automatischen Modemtyperkennung und zur Durchführung weiterer Eingaben zusammenwirkt,
- eine fünfte vorbestimmte Taste (SET-Taste) vorgesehen ist, bei deren Betätigung auf einen Programmdurchführungsschritt zur Anpassung des jeweiligen Modems an die Telefonanlage des Nutzers der Frankiermaschine verzweigt wird,
- ein weiterer Speicherbereich im nichtflüchtigen Speicher (5a, 5b, 8) für einen Modem-Initialisierungsspeicher (MIS)vorgesehen ist, der Daten für eine solche Anpassung speichert, und
- ein im Nurlesespeicher (ROM 11) gespeichertes Programm zur Durchführung einer entsprechenden Anpassung vorgesehen ist.

## Claims

1. A method for automatic modem type detection and adaptation within a communication mode of a franking machine that is programmed for entering into the communication mode with a remote data central and is equipped with a control unit with a microprocessor (6), wherein a modem is selectively addressed via an interface in order to transmit data and the microprocessor is programmed in such a manner that the modem can be initialized and that, after an automatic setup of the communication and after completing the communication, the communication mode is left, wherein
a) operation of a first predefined button (P-button) triggers the enter ing into communication mode (300);
b) in the communication mode, there is carried out an automatic modem type detection (step 320) first, in which
- in a first sub-step (3250), on the basis of information stored in a memory area of a Modem Detect Memory (MDM) in a non-volatile memory (4a, 5b,8) that is accessed by the program, there is either detected the modem type or it is detected that no respective information on the modem type is stored; and
- only if it is detected in said first sub-step (3250) that no respective information on the modem type is stored in the Modem Detect Memory (MDM), there is carried out a recognition procedure (3210, 3211, 3220, 3221, 3230, 3231, 3240, 3241) for the modem type with a storage of respective information (3280, 3290) on the modem type in the Modem Detect Memory (MDM);
c) then, the modem type is displayed (step 330) on a display (3);
d) then, an input/display routine (step 331) is started;
e) subsequently, it is determined in an inquiry (step 332) whether a third predefined button (X-button) was operated and, if that is the case,
- the process is branched back to the beginning of said entry/display routine (step 331) through a setting mode for variable initialization strings or initialization parameters for further entries (step 336).
while, if that is not the case,
- it is determined in a further inquiry (step 339) whether a second predefined button (R-button) was operated;
and,
f) if the second predefined button (R-button) was operated, the connected modem is initialized according to the stored modem type followed by dialling (340), wherein the microprocessor (6) of the franking machine compiles a dialling string for a variable modem configuration that corresponds to the further parameters entered in the setting mode for the variable initialization strings or initialization parameters (step 336) in order to dial up a remote data central.

2. A method according to Claim 1, wherein the recognition procedure for the modem type comprises a number of sub-steps in which specific modem-related transmission sequences stored in a non-volatile manner in the franking machine are sent successively to the connected modem (3210, 3220, 3230) and the modem sends back its specific modem-related reply to the microprocessor (6) of the franking machine; and microprocessor (6) makes a comparison (3211, 3221, 3231) of the reply signals with stored reply signals for an automatic modem type recognition before the modem type recognized that way is stored in the Modem Detect Memory (MDM) in a non-volatile manner (3290).

3. A method according to Claims 1 and 2, wherein, for displaying (330) the modem type on display (3), the line "ModEM 1" is shown for a predefined period with a simultaneous acoustic signalization.

4. A method according to Claims 1 to 3, wherein the franking machine checks, within the above-mentioned step for the initialization of the modem (step 340), whether the initialization of the modem and the dialling-up of the data central were performed without errors (sub-step 360) and wherein, from said check, there is branched through an error analysis (step 361) to a status display (step 310) in order to show that a modem initialization error has occurred when no modem is connected or a modem is not operational.

5. A method according to Claim 4, wherein the franking machine checks, within the above-mentioned step for the initialization of the modem (step 340) (sub-steps 341, 342, 343, 344), which modem type is stored in the Modem Detect Memory (MDM) and wherein the microprocessor (6) of the franking machine is programmed to perform an interface initialization according to the modem type in a pre-defined manner (sub-steps 345, 346, 347) and subsequently, if a modem type was detected in the further checking steps (sub-steps 348, 349, 350, 351), compile a respective dialling string (sub-steps 352, 354, 355, 356) for dialling up the data central (sub-steps 353, 357, 358, 359) or, if no modem was detected in the further checking steps (sub-steps 348, 349, 350, 351), branch, directly through the step for checking whether the initialization of the modem and the dialling-up of the data central were performed without errors (sub-step 360), to the error analysis (step 361) in which it is determined, on the basis of further data stored or detected, whether a hardware error or a software error has occurred.

6. A method according to Claim 5, wherein the microprocessor (6) of the franking machine is programmed to perform, within the above-mentioned step for initializing the connected modem (step 340), after checking which modem type is stored in the Modem Detect Memory (MDM) (sub-steps 341, 342), an interface initialization according to a first or second modem type if either of these modem types was detected by the check or otherwise perform an interface initialization according to a third modem type.

7. A method according to Claim 5, wherein the interface initialization is performed in a way assigned to the detected modem type and/or assigned to a predefined interface of an input/output control module (4) of the franking machine as an external or internal modem and/or assigned to the respective baud rate of the modem type, wherein the assignment is stored in a non-volatile manner in a memory area.

8. A method according to Claims 1 to 7, wherein the microprocessor (6) of the franking machine is programmed to determine, within the above-mentioned step for initializing the connected modem (step 340), the modem type in further checking steps (sub-steps 348, 349, 350, 351) and to compile a respective dialling string (sub-steps 352, 354, 355, 356) for dialling-up the data central and to initialize the modem according to the modem type before the dialling.

9. A method according to Claim 4, wherein, after the error analysis (step 361), it is stored in the Modem Detect Memory that no respective information on the modem type is available (step 362) before branching to the status display (step 310).

10. A method according to Claims 1 to 9, wherein the microprocessor (6) of the franking machine is programmed to initialize, according to the stored modem type, an interface in the input/output control module (4) and the connected modem before the data central is dialled up.

11. A franking machine having an arrangement for automatic modem type detection and adaptation within a communication mode (300), said franking machine being equipped with a control unit with a microprocessor (6) and connected, via an input/output control module (4), with a modem and with a means for at least triggering the entry into communication mode, the modem being selectively addressed via an interface in order to transmit data; wherein the franking machine is moreover equipped with a non-volatile memory (5a, 5b, 8) and a read-only memory (ROM 11) that are connected with the microprocessor (6) via a microprocessor bus in order to provide the latter with a program and program code by which microprocessor (6) is programmed in such a manner that the modem can be initialized; and wherein
a) the means for at least triggering the entry into communication mode includes an input means (2) having a first predefined button (P-button) the operation of which triggers the entering into communication mode;
b) the non-volatile memory (5a, 5b, 8) has a memory area for a Modem Detect Memory (MDM) that is accessed by the program for automatic modem detection in order to either
- detect the modem type or
- detect that no respective information on the modem type is stored, wherein,
in case it is detected that no respective information on the modem type is stored, the read-only memory (ROM 11) also contains stored specific modem-related transmission sequences for a predefined number of modem types (23, 24 or 25) so as to be able to perform a recognition procedure for modem type recognition after which respective information on the modem type is stored in the Modem Detect Memory;
c) the franking machine has a display unit (3) for displaying the modem type;
d) the franking machine is programmed to start an input/display routine;
e) the input means (2) moreover has a second and a third predefined button, wherein
- operation of the third predefined button (X-button) causes a switching to a setting mode for setting variable initialization strings or initialization parameters for editing the initialization,
and
- operation of the second predefined button (R-button) causes the initialization of the connected modem and the subsequent dialling (340), wherein
f) the microprocessor (6) of the franking machine is programmed to initialize, upon operation of the second predefined button (R-button), an interface in the input/output control module (4) and the connected modem (23, 24 or 25) according to a modem type stored in the Modem Detect Memory (MDM) before a data central is dialled up.

12. An arrangement according to Claim 11, wherein specific modem-related transmission sequences are available stored in a modem initialization memory (MIM) of a non-volatile memory (5a, 5b, 8) of the franking machine.

13. An arrangement according to Claim 11, wherein an area for a transmission sequence for a modem for a variable modem configuration (modem type 4) is provided in a non-volatile memory (5a, 5b, 8).

14. An arrangement according to Claim 11, wherein
- operation of the second predefined button (R-button) confirms a certain input parameter;
- there is provided a program stored in the read-only memory (ROM 11) that, in the communication mode, cooperates with microprocessor (6) for an automatic modem type detection and for making further entries;
- there is provided a fifth predefined button (SET button), the operation of which branches to a program execution step for adapting the respective modem to the private branch exchange of the user of the franking machine;
- there is provided a further memory area in the non-volatile memory (5a, 5b, 8) for a modem initialization memory (MIM) that stores data for such an adaptation; and
- there is provided a program stored in the read-only memory (ROM 11) for performing a respective adaptation.

## Revendications

1. Dispositif d'identification automatique de type de modem et adaptation à l'intérieur d'un mode de transmission d'une machine à affranchir le courrier, tout en étant programmée, pouvant entrer dans le mode de transmission avec une unité centrale de données à distance et qui présente une unité de liaison avec un microprocesseur (6), en même temps qu'un modem est sélectionné par une interface, afin que les données soient transmises et que le microprocesseur soit programmé de telle manière que, le modem puisse être initialisé et que, après une ouverture automatique de la communication et après exécution de la communication, le mode de transmission soit quitté, en même temps que,
a) la commande d'une première touche prédéfinie (touche P) déclenche l'entrée dans le mode de transmission (300),
b) une identification automatique de type de modem (étape 320) s'effectue, tout d'abord, dans le mode de transmission, dans lequel,
- lors d'une première sous étape (3250), à l'aide d'une information enregistrée, dont le programme a accès, dans un ensemble de stockage pour une mémoire détectrice de modem (MDM) dans une mémoire (5a, 5b, 8) non-volatile, le type de modem est, soit déterminé, soit identifié, si bien qu'aucune information analogue est mise en mémoire à travers le type de modem et
- seulement lorsque, durant la première sous étape (3250), il est identifié que, dans la mémoire détectrice de modem (MDM), aucune information analogue n'est sauvegardée à travers le type de modem, une procédure d'identification (3210, 3211, 3220, 3221, 3230, 3231, 3240, 3241) pour le type de modem est lancée avec le stockage d'une information analogue (3280, 3290) à travers un type de modem dans la mémoire détectrice de modem (MDM),
c) ensuite, un affichage du type de modem (étape 330) apparaît sur un écran (3),
d) ensuite, une séquence d'entrée/affichage (étape 331) est lancée,
e) puis, il est vérifié dans un terminal d'interrogation (étape 332), si une troisième touche prédéfinie (touche X) a bien été commandée et, si cela est le cas,
- si elle est rebranchée par un mode de réglage pour des chaînes de caractères d'initialisation variables ou, pour être plus précis, pour un paramètre d'initialisation en vue d'autres entrées (étape 336) au début de la séquence prénommée d'entrée/affichage (étape 331),
pendant que, si cela n'est pas le cas,
- il est vérifié, dans un autre terminal d'interrogation (étape 339) si, une deuxième touche prédéfinie (touche R) a bien été commandée
et
f) dans le cas où, la deuxième touche prédéfinie (touche R) aurait été commandée, une initialisation du modem connecté selon le type de modem mis en mémoire et de la sélection adjacente s'ensuit alors (340), en même temps que le microprocesseur (6) de la machine à affranchir le courrier compose une chaîne de caractères de sélection pour une configuration variable de modem, qui l'entre dans le mode de réglage pour des chaînes de caractères d'initialisation variables ou, pour être plus précis, pour un paramètre d'initialisation (étape 336), répondant à d'autres paramètres, afin de sélectionner l'unité centrale de données à distance.

2. Dispositif, selon la spécification 1, dans lequel la procédure d'identification saisit un nombre à sous étapes pour le type de modem, dans lequel des séquences émettrices mises en mémoire et spécifiques au modem de manière non-volatile dans la machine à affranchir le courrier sont diffusées (3210, 3220, 3230), les unes après les autres, au modem connecté, et le modem renvoie sa réponse spécifique au modem au microprocesseur (6) de la machine à affranchir le courrier et ainsi, le microprocesseur (6) effectue une comparaison (3211, 3221, 3231) des signaux de réponse avec des signaux de réponse mémorisés pour l'identification automatique de type de modem, avant que le type de modem ainsi détecté ne soit enregistré (3290) de façon non-volatile dans la mémoire détectrice de modem.

3. Dispositif, selon les spécifications 1 et 2, dans lequel un affichage « ModEM 1 » apparaît, pendant une durée déterminée alors qu'une signalisation acoustique se fait entendre, lors de l'affichage (330) du type de modem sur l'écran (3).

4. Dispositif, selon les spécifications 1 à 3, dans lequel la machine à affranchir le courrier vérifie, dans l'étape prénommée d'initialisation du modem connecté (étape 340), si l'initialisation du modem et la sélection de l'unité centrale de données peuvent être correctement effectuées (sous étape 360) et si, de cette vérification, elle est aiguillée (étape 310) sur un voyant d'état par une analyse d'erreur (étape 361), afin d'afficher qu'une erreur d'initialisation de modem existe, lorsque aucun modem n'est connecté ou qu'un modem n'est pas en position de marche.

5. Dispositif, selon la spécification 4, dans lequel la machine à affranchir le courrier vérifie (sous étapes 341, 342, 343, 344), dans l'étape prénommée d'initialisation du modem connecté (étape 340), quel type de modem est enregistré dans la mémoire détectrice de modem (MDM) et que le microprocesseur (6) de la machine à affranchir le courrier est programmé. Une initialisation d'interface selon le type de modem doit être prévue (sous étapes 345, 346, 347) d'une manière prédéfinie et ensuite, si, dans d'autres étapes de vérification (sous étapes 348, 349, 350, 351), un type de modem venait à être détecté, une chaîne de caractères de sélection appropriée devra être composée (sous étapes 352, 354, 355, 356), afin d'appeler (sous étapes 353, 357, 358, 359) l'unité centrale de données ou, pour être plus précis, si, lors d'autres étapes de vérification (sous étapes 348, 349, 350, 351), aucun type de modem ne devait être détecté, de contrôler directement par étape si, l'initialisation du modem et la sélection de l'unité centrale de données peuvent être effectuées correctement (sous étape 360), pour l'aiguillage de l'analyse d'erreur (étape 361), dans laquelle il est déterminé si, en raison d'autres données enregistrées ou détectées, une panne hardware ou de logiciel est existante.

6. Dispositif, selon la spécification 5, dans lequel le microprocesseur (6) de la machine à affranchir le courrier est programmé, pendant l'étape prénommée d'initialisation du modem connecté (étape 340), après vérification, quel type de modem est enregistré (sous étapes 341, 342) dans la mémoire détectrice de modem (MDM). Une initialisation d'interface, conformément à un premier ou à un deuxième type de modem, doit être effectuée, dans la mesure où, un de ces types de modem serait détecté lors du contrôle, ou sinon, une initialisation d'interface conformément à un troisième type de modem devra être effectuée.

7. Dispositif, selon la spécification 5, dans lequel l'initialisation d'interface est effectuée, affectée à un type de modem identifié et/ou affectée à une interface prédéfinie d'un module de commande d'entrée/sortie (4) de la machine à affranchir le courrier comme modem externe ou interne et/ou affectée à un taux approprié en baud du type de modem, pendant que le classement est enregistré de manière non-volatile dans une zone de mémoire.

8. Dispositif, selon les spécifications 1 à 7, dans lequel le microprocesseur (6) de la machine à affranchir le courrier est programmé, pendant l'étape prénommée d'initialisation du modem connecté (étape 340), le type de modem doit être établi dans d'autres étapes de vérification (sous étapes 348, 349, 350, 351) et une chaîne de caractères de sélection appropriée doit être composée (sous étapes 352, 354, 355, 356), afin d'appeler l'unité centrale de données, ainsi que d'initialiser le modem selon le type de modem avant une sélection.

9. Dispositif, selon la spécification 4, enregistrant, après l'analyse d'erreur (étape 361) dans la mémoire détectrice de modem, qu'aucune information analogue ne soit présentée (étape 362) par le type de modem, avant qu'elle ne soit aiguillée sur le voyant d'état (étape 310).

10. Dispositif, selon les dispositions 1 à 9, dans lequel le microprocesseur (6) de la machine à affranchir le courrier est programmé, une interface dans le module de commande entrée/sortie (4) et le modem connecté doivent être initialisés, selon le type de modem enregistré, avant que l'unité centrale de données ne soit appelée.

11. Une machine à affranchir le courrier avec un ordre d'identification automatique de type de modem et adaptation à l'intérieur d'un mode de transmission (300), tout en étant équipée d'une unité de liaison avec le microprocesseur (6) et étant connectée avec un modem et avec un support par un module de commande d'entrée/sortie (4), afin de déclencher au moins l'entrée dans le mode de transmission, pendant que le modem est choisi de manière sélective par une interface, afin de transmettre les données. La machine à affranchir le courrier est équipée, en outre, d'une mémoire (5a, 5b, 8) non-volatile et d'une mémoire exclusivement de lecture (ROM 11), qui sont connectées par un bus microprocesseur avec un microprocesseur (6), afin que, pour celui-ci, il soit mis à sa disposition un programme ainsi qu'un code de programme, avec lesquels le microprocesseur (6) est programmé de telle manière que, le modem peut être initialisé, tandis que, en outre,
a) le support comprend un support de données (2), afin de devoir déclencher au moins l'entrée dans le mode de transmission, lequel présente une première touche prédéfinie, tandis que la commande de la première touche prédéfinie (touche P) déclanche l'entrée dans le mode de transmission.
b) la mémoire (5a, 5b, 8) non-volatile présente une zone de mémoire pour une mémoire détectrice de modem (MDM), sur laquelle le programme a accès à l'identification automatique de type de modem, afin de, ou bien,
- fixer le type de modem, ou bien d'
- identifier qu'aucune information analogue n'est enregistrée par le type de modem, tandis,
s'il devait être vérifié, qu'aucune information analogue n'est enregistrée par le type de modem, des séquences émettrices spécifiques au modem sont aussi stockées dans la mémoire exclusivement de lecture (ROM 11) pour un nombre prédéfini en types pour les modems (23, 24 ou selon 25), afin de pouvoir effectuer une procédure d'identification de l'identification de type de modem, après quoi, une information correspondante sera stockée dans la mémoire détectrice de modem par le type de modem,
c) la machine à affranchir le courrier présente un poste d'affichage (3) pour la visualisation du type de modem,
d) la machine à affranchir le courrier est programmée, une procédure d'entrée/affichage doit être lancée
e) le support de données (2) présente en supplément une deuxième et une troisième touches prédéfinies, tandis que,
- la commande de la troisième touche prédéfinie (touche X) permet une commutation dans un mode d'ajustement pour le réglage de chaînes variables de caractères d'initialisation ou, pour être plus précis, de paramètres d'initialisation pour la correction de l'initialisation, et
- la commande de la deuxième touche prédéfinie (touche R) provoque (340) l'initialisation du modem connecté et la sélection adjacente,
tandis que,
f) le microprocesseur (6) de la machine à affranchir le courrier est programmé, une interface dans le module de commande d'entrée/sortie (4) et le modem connecté (23, 24 ou selon 25), selon un type de modem enregistré dans la mémoire détectrice de modem (MDM), doivent être initialisés, après commande de la deuxième touche prédéfinie (touche R), avant qu'une unité centrale de données soit appelée.

12. Procédé, selon la spécification 11, dans lequel des séquences émettrices spécifiques au modem sont stockées dans une mémoire d'initialisation de modem (MIM) d'une mémoire (5a, 5b,8) non-volatile de la machine à affranchir le courrier.

13. Procédé, selon la spécification 11, dans lequel une zone pour une séquence émettrice destinée à un modem pour une configuration de modem variable (modem type 4) est prévue dans une mémoire (5a, 5b, 8) non-volatile.

14. Procédé, selon la spécification 11, dans lequel
- la commande de la deuxième touche prédéfinie (touche R) confirme un paramètre souhaité d'entrée,
- un programme enregistré est prévu dans une mémoire exclusivement de lecture (ROM 11), lequel coopère, à l'intérieur du mode de transmission, avec le microprocesseur (6), à l'identification automatique de type de modem et à la réalisation d'autres entrées.
- une cinquième touche prédéfinie (touche SET) est prévue, par laquelle une commande est aiguillée sur un pas de programme d'exécution pour l'adaptation du modem spécifique à l'installation téléphonique de l'utilisateur de la machine à affranchir le courrier
- un autre ensemble de stockage est prévu dans la mémoire (5a, 5b, 8) non-volatile pour une mémoire d'initialisation de modem (MIM), sauvegarde les données pour cette sorte d'adaptation, et
- un programme enregistré dans la mémoire exclusivement de lecture (ROM 11) pour l'exécution d'une adaptation adéquate est prévu.
